Europäisches Patentamt

European Patent Office

Office européen des brevets

(19)

(11) **EP 1 207 572 A1**

(12) ## EUROPEAN PATENT APPLICATION

(43) Date of publication:
**22.05.2002 Bulletin 2002/21**

(51) Int Cl.[7]: **H01M 4/04**, H01M 4/62,
H01M 4/86

(21) Application number: **00811081.9**

(22) Date of filing: **15.11.2000**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (71) Applicant: **Dr. Sugnaux Consulting**<br>**1015 Lausanne (CH)**<br><br>(72) Inventor: **Sugnaux, François**<br>**1807 Blonay (CH)** |

(54) **Mesoporous electrodes for electrochemical cells and their production method**

(57)     Provided are high power and high kinetics electrodes for electrochemical devices employing non-aqueous organic electrolyte, solid polymer electrolyte or the like, based upon electrically active materials structured as discrete contacting mesoporous microparticles with a bimodal pore radius distribution, which in addition may contain conductive nanofibres, other active metal inclusions or further coatings, that are linked together by highly porous organic binders and a percolating network of conductive particles and polymers, wherein the microparticles have a first average pore radius smaller than 5 nm and a second average pore radius differing by at least about 5 nm.

The porous solid microparticles produced hereby are comprising a three dimensionally substantially continuous inter-penetrating network of interconnected pores.

The preferred size of the microparticles is 0.05 μm to 30 μm and their preferred specific surface area is 0.01 $m^2$/g to 300 $m^2$/g.

Also provided are processes for preparing these bimodal mesoporous microparticles, for coating selectively their surface with binders and conductors, for forming such porous high kinetics electrodes in a flexible form and uses thereof in various electrochemical devices.

Fig. 4C

EP 1 207 572 A1

**Description**

FIELD OF THE INVENTION

This invention relates to electrodes for electrochemical cells employing non-aqueous organic electrolyte, solid polymer electrolyte or the like and more particularly to porous electrode materials thereof, i.e. anode or cathode, featuring discrete doped or non-doped oxide or hydro-oxide microparticles with a bimodal mesoporous pore size that provide excellent high-rate charge and discharge, a high capacity, high cyclability characteristics and high reliability for the safety aspect.
This invention also relates to processes for obtaining flexible electrodes of this type from the electrically active material selected, using in particular spray-drying for solid microparticle formation and for patterned coating of microparticles with binder compounds. Applications for these new porous electrodes include electrochemical devices with innovative cell designs e.g. high power batteries, solar cells and fast electrochromic devices.

DESCRIPTION OF PRIOR ART

Semiconductor oxide ion insertion materials used for energy storage devices such as batteries and for other electrochemical cells have been studied extensively since the early 1970's. Oxide materials that are transparent have been surface-sensitised and used as photoactive electrodes in other types of electrochemical cells, photoelectrochemical and electrochemichromic cells, see e.g. US Pat. No. 4'080'488. The same oxide or other oxide, hydroxide, oxyhydroxide materials used in electrochemical generators have allowed the reversible intercalation of ions, particularly protons or lithium, within the crystalline lattice of their electrodes.
A traditional electrochemical cell has a cathode and an anode, separated by a porous separator or a space. A ion-conducting electrolyte provides ion transfer from one electrode to the other and permeates as a common body the porous structure of each of the electrodes and the separator. Both electrodes are connected by electron conductors to the external positive and negative poles of the electrochemical devices.
To date, a number of ion insertion compounds have been successfully developed and investigated for the purpose of accumulators, see for example, M. Winter et al., « Insertion Electrode Materials for Rechargeable Lithium Batteries », Advanced Materials, 10, 725-763 (1998). Much of today's ion insertion anodes rely on carbonaceous materials, despite of the need to use passivation layers to reduce their too high reactivity and thermodynamical instability, thereby severely limiting the ion diffusion and thus their power, see e.g. US Pat. No. 5,310,553 and 6,030,719. It is now well known that at anode potential below about 1V versus Li+ /Li degradation reactions of the electrolyte will generate increasing quantities of passivation layers that ultimately will bring the failure of the battery.

Therefore, to replace anodes of lithium-ion batteries of an undesirable voltage of 0 to 0.3 V vs lithium (coupled with cathodes of 3.5 to 4V), new needs have emerged:

- on one side, there is a need for safer electrodes with more than 1V vs. lithium, that when paired with cathodes of 4.5 V or more could give the same type of voltage as existing lithium-ion batteries with a much improved safety and power, for applications like batteries for hybrid electrical vehicles,
- on the other side, there is a need for electrodes with a lower voltage for cells at ca. 1.5 to 1.8 V but with a higher capacity and a faster recharge, to fulfil the needs of advanced electronic devices that use low voltage ICs.

A general need for these devices is to assure a high total conductivity of the electrically active material, due to both ionic and electronic charge carriers, as well as their transport across electrodes/electrolyte interfaces of large accessible area, to make full use of the active materials.
It occurred to us that active electrode materials with a large active surface and which intercalate Li at potentials higher than 1V versus Li+ /Li would avoid the formation of a passivation layer formed from electrolyte reactions. This indeed has been demonstrated in the batteries that we disclosed in Pat. No. WO 99,59218, comprising a highly porous electrically conductive film built by sintering nanoparticles of a metal oxide precursor at $300°$ to $800°$ C on a conductive support. The high conductivity gained by a direct contact between the active material and the electrolyte allowed the battery to be discharged and charged at high power up to 10C rate (i.e., full discharge of the battery in one-tenth of one hour) and with long cycle life over 500 cycles.
There is still a need for new processes that permit to build electrochemical cells more economically, e. g. with a roll-to-roll process on flexible polymer materials, and for materials with a high electrode/electrolyte interface area.
Early attempts to use oxide ion insertion materials, e.g. $TiO_2$ electrodes of prior art such as described by W.J. Macklin et al. (Solid State lonics 53-56 (1992) 694-700) have resulted in the slow diffusion of Li ion into large particles, that yielded significantly low capacity and low power. However for many oxides like in the example from W. Macklin, the diffusion of lithium ions into solid materials is the principal rate-limiting factor, e.g. into $TiO_2$ the diffusion rate for lithium ion is $10^{-14}$ $cm^2/s$.
An increase of the performance of oxide-based electrodes has been sought by increasing the electrode/electrolyte interface area by different means:

- (a) rough electrode films, (b) porous and rough films or (c) electrodes made from small dispersed particles.

(a) Rough electrode films have been obtained by film etching, see US Pat. US 4'732'621, but only a limited improvement over smooth films was thus obtained.

(b) Electrodes made from porous and rough films have been obtained by sintering colloidal particles built up on the surface of a conductive layer using either a "sol-gel method" or a "colloidal method", see e.g. WO Pat. 91'16719, or by "vapor quenching" see e.g. US Pat. 5,905,000 or else by sintering large porous agglomerated particles on the surface of a conductive layer, see US Pat. US 6,075,203.

A similar process to make a rigid semiconductor film directly sintered on a conductive electrode has been used for all known dye solar cell disclosures, e.g. Pat. No. EP 333'641, US Pat. No. 5'350'644, 5'441'827, 5'525'440, all to M. Graetzel et al., EP 407'182, US Pat. No. 5'693'432, 6'075'203, 6'084'176; US Pat. No. 5,569,561 for batteries, as well as e.g. Pat. No. EP886804 and WO98,35267 for electrochromic cells disclosures. Referring to FIG. 2, a photoelectrochemical cell 21 of previous art comprises a glass cover 23 with a transparent conductive film 24 deposited thereon, optionally coated with a platinum catalyst, and a redox electrolyte 25, e.g. iodine-iodide charge carrier (or optionally a hole conductor), which are all transparent to light 22.
Light energy is transduced into electrons by a rough semiconductor film 27 with a photosensitising dye 26 attached at the surface of the film and interfacing with the electrolyte 25. The semiconductor film is electronically contacted by sintering on a rigid conductor 28.
Such films of rigid materials need to be sintered on a thick rigid conductor. Furthermore, only thin active materials layers prevent cracks and delamination, so multiple coatings were necessary. A high amount of heat and time were required in the heating-cooling cycle of thick electrodes, what is energetically unfavorable. Also, the subsequent dye binding on the surface of the film or electrolyte impregnation was loosely controlled and uneven.

(c) The increase of electrode/electrolyte interface area by using small particles dispersed in a matrix has been described, e.g.:

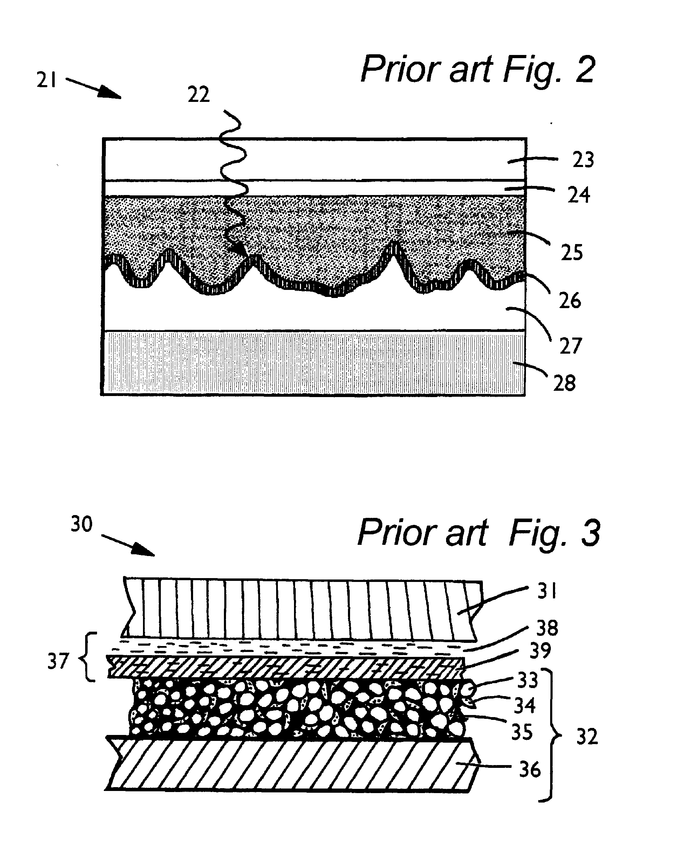

- in U.S. Pat. No. 5,569,561 or 6,124,057 for a process in which nanoparticles are compressed in the form of pellets with carbon powder and a polymeric bonding material, then dried at 160°C for 12 h; this process yield electrodes in the form of brittle inflexible films, that are unsuitable for building conventional rolled-type batteries or unbreakable photovoltaic or electrochromic panels.
Little space was left in the electrode for the electrolyte, so only low power applications were envisioned. Referring to FIG. 3, such a generator 30 of previous art comprised a nanoparticulate electrode 32 made from a compressed frit composed of nanoparticles of electrochemically active material 33 embedded in carbon particles 34 and a binder 35, bonded on a rigid metallic conductive electrode 36, a ion-conductive electrolyte 37 of which the majority is in a reservoir 38 or a porous spacer 39. The nanoparticulate electrode is facing a standard counter-electrode 31.

- in US Pat. No. 5,812,300 for a process in which a film of dense conductive electrochromic microparticles were dispersed in an organic matrix to provide a moderate electrical resistance, e.g. on the order of 100 ohms to 1,000 ohms. This was inadequate for high power electrochemical devices.
Recently, the limitations of polymer matrix materials used in electrochemical cells have been decreased by using a matrix with an extractable compound that creates a porosity where ions of the electrolyte can migrate (see e.g. US Pat. 5,540,741 and 5,928,391). However, this additional porosity of the embedding matrix did not solve the limitations of the non-porous active material.
To overcome these limitations and for increasing the reactivity of electrically active materials, we have envisioned to use thermodynamically stable electrically active materials in the form of porous nanoparticles. Benefits for electrochemical generators would be an increase of ion intercalation by enlargement of the surface in contact with an electrolyte; for photo- or electrochromic-active devices benefits would be a higher surface are available for a functional coatings in contact with an electrolyte.

Techniques for the production of nanoparticles include (a) chemical and (b) physical methods.

(a) Physical methods such as gas-phase condensation, spray pyrolysis, laser ablation and plasma synthesis involve energetic process conditions that rapidly lead to large amorphous aggregated particles or vitrified non-porous pigment-grade particles. For example, vapor phase nucleation produces crystalline non-porous particles (US Pat. No. 5,358,695), while flame synthesis with advanced controls like size control by charging, described by US Pat. No. 5,861,132, permits to produced particles of about 13 nm, but the anatase $TiO_2$ obtained contains undesirable rutile impurities that have a low conductivity.

(b) Chemical methods include sol-gel and hydrolysis synthesis, chemical vapor deposition, electrolytic deposition and reactive spray flame-, plasma- or laser- pyrolysis. Chemical synthesis in liquid phase is advantageous in that it allows tailored synthesis through assembly of atomic or molecular precursors, enhanced control of stoichiometry, and mixing of constituent phases at the molecular level. Chemical hydrolysis synthesis is also superior in providing for faster, cost-effective production of bulk quantities of materials.

An example of such a precisely synthesized and organized material is "nanorods" of mesoporous anatase (see. e.g. S.D. Bumside et al. Chem. Mater., Vol. 10, No 9, 1998).

As-synthesized nanoparticle powders from hydrolysis synthesis are generally unsuitable for electrically active applications and need further processing to electrically connect the nanoparticles together. Furthermore, these nanoparticles are very difficult to handle due to their low bulk density and tend to become easily airborne requiring special safety precautions in handling.

In prior art, the methods of thermal spray or plasma deposition developed for nano-oxides could rapidly heat agglomerated oxide particles. This produced a spray of partially or completely melted droplets to form a dense film that has no more porosity accessible for ion intercalation and that might have contained carbon impurities (see e.g. U.S. Pat. No. 5'833'892 & 6,025,034).

Many other disclosures have dealt with inorganic materials used as adsorbent or catalyst host, but not as electrode materials.

Accordingly, there remains a need to develop new and improved porous electrically active materials for electrochemical cells that would be exhibiting a precisely distributed porosity favouring fast interactions at their interfaces, high ion insertion kinetics, giving an homogenous and high electronic conduction, as well as providing a broader range of cell voltages, to fulfil the high rate and safety needs of both the cells of 3V and more, and the fast recharging needs of cells of about 1.5 V.

Furthermore, there is an urgent need to develop scalable processes for the safe, economical and environmentally friendly production of these improved porous materials and electrodes, particularly in the form of microparticles and to maintain a tight electrical contact between the particles of each electrode, while also holding the electrodes dose to each other without the aid of a rigid container and maintaining a high mobility of the lithium ions in non-aqueous electrolyte throughout the porosity of the electrodes.

BRIEF SUMMARY OF THE INVENTION

It has been unexpectedly discovered that the microparticles formed by agglomerated oxide nanoparticles that have been sintered in selected conditions are still keeping part of the original mesoporosity, while acquiring a secondary larger porosity, thus exhibiting a bimodal porosity. It has also been discovered that a patterned coating on the outer surface of the solid microparticles of the invention permits to easily build an efficient percolation network during a simplified electrode formation process.

It is an advantage of the present invention to provide solid microparticles that could be handled like traditional discrete electrochemical materials to form electrodes of the desired density, but exhibit superior kinetic properties typical of nanoparticles. The porous nanoparticles are thus overcoming well-known power density limitations of lithium-ion batteries, without the limitations of brittle sintered films or hazardous low bulk density nano-powders, and so have great utility as electrically active materials in all electrochemical devices, particularly flexible ones.

A feature of mesoporous materials such as metal oxide based materials, that have a pore size peaking in a region of 5 nm or less, is that a high fraction of atoms reside at the interfaces in the pores of materials, which exerts a profound influence on their interface transfer properties, e.g. ion intercalation kinetics or photon-electron conversion efficiency.

In addition, it is an advantage of the invention to provide a method of making a dense porous solid electrode that requires less inactive binder or electron conductive materials than traditional discrete particle electrodes, thus providing a higher energy density.

Briefly, the invention provides a novel and useful article of manufacture for an electrochemical device which includes at least one porous electrode layer made from solid discrete particles having a novel electrically active material structure based on bimodal mesoporous microparticles, in electrical contact through specialized domains of the particle that are interfacing with either an ion conducting electrolyte or an electron conducting bicontinuous percolating network.

Accordingly, it is an object of the present invention to provide a method for preparing selectively structured and contacted mesoporous microparticles at a low cost without using a complicated reaction apparatus.

It is a further object of the invention to provide a simple and convenient method for producing electrochemical devices having a novel composite electrode structure based on bimodal mesoporous bicontinuous networks.

It is another object of the invention to provide microparticles having fundamentally elongated pores formed by the inclusion of elongated oxide members, as nanorods and the like, whereby compositions comprising the elongated pores exhibit improved ion diffusion kinetics.

It is still another object of the invention to provide microparticles having fundamentally elongated electrically interconnected members, comprising conductive nanofibres or nanotubes, whereby compositions comprising the elongated conductive members exhibit improved electronic conductivity and mechanical stability.

It is a further additional object of the invention to obtain porous metal oxide semiconductor based materials of which the voltage can be adjusted without adding complexity to the process, whereby compositions comprising dopants added to the principal metal may benefit from a shift of their redox potential and from an increased stabilization. The invention is not limited with respect to the type of dopant material or the level of dopant material that can be employed.

Yet another object of the invention is to provide a method that permits to control the formation of pores in discrete particles, whereby the addition of volatile polymers or ionic or neutral surfactants to the initial spray feed solution permits a greater order and a greater control of pore size during spray-drying agglomeration and subsequent sintering.

It is another object of the invention to provide microparticles that have a differential porosity, i.e. a dense core and a mesoporous external coating, optionally with a dense core wherein the surface is electrically conductive.

It is another object of the invention to provide microparticles that comprise solid electroactive particles linked by bimodal mesoporous particles.

It is further another object of the invention to provide microparticles that have a defined shape, either spherical or flaky, whereby the flaky shape can be obtained in a spray-dryer by impacting aggregates on a rotating drum.

It is still another object of the invention to provide a process permitting to build a percolating network linking the microparticles together both electrically and mechanically, using polymers in the form of an aqueous latex.

It is still a further object of the invention to provide a process permitting to cast an electrode using selectively coated mesoporous microparticles of the invention.

Other and further objects, features and advantages of the present invention will become clear as the description proceeds and be readily apparent to those skilled in the art in reading the description of preferred embodiments which follows.

DEFINITIONS

As used herein, the term "mesoporous" refers to pore sizes from 2 nm to 50 nm, according to the definition of Union of Pure and Applied Chemistry (UPAC); materials with pore sizes exceeding 50 nm are denominated as "macroporous".

The term "discrete" refers to distinct elements, having a separate identity, but does not preclude elements from being in contact with one another.

As used herein, the term "microparticle" refers to a grain or granule materials that form a single solid body of a size from 0.05 to about 30 microns, that can be a composite, but this term does not refer to aggregated particle bodies that are composed of many bodies that can be re-separated, for which the term "aggregate" is used, nor to a single solid body smaller than 50 nanometers for which the term "nanoparticle" is used herein. The term "active" refers to a material that is reversibly involved in the electrochemical or photoelectro-chemical conversion process, either as ion intercalating or as a semiconductor sensitised by a dye or interfacing with a redox chromophore.

The term "interface" is understood herein to mean the transition zone between (i) the active material of an electrode and (ii) a transport material in its contact, used to transport ions, holes or electrons. The term "electronic" means dealing with electrons, but not with ions. The term "electrolyte" means a transporter in a solid or liquid form of atoms, molecules, ions or holes. By "selective coating," as that term is used herein, it is meant that the technique or object described is characterized by regions which have been coated with some material, and regions which have either not been so coated, or have been coated to a substantially lesser extent. By "patterned layer," as that term is used herein, it is meant a layer which is characterized by defined regions of a plurality of thicknesses, where some such regions may be of zero thickness (i.e., the layer may contain holes). The term "sintering" used herein means generally that discrete particles are partially fused to be bonded and form a single solid body where discrete particles can no more be distinguished.

BRIEF DESCRIPTION OF THE DRAWINGS

The features of the present invention are further set out in the following examples, wherein like numerals are utilized to designate like parts, given by way of non-limiting example with reference to the accompanying drawings in which:

FIG. 1     shows a schematic illustration of the process used in the present invention;

FIG. 2     shows a schematic sectional view of prior art rough film dye-sensitized photoelectrochemical device;

FIG. 3     depicts a schematic sectional view of prior art composite nanoparticular battery;

FIG. 4A     depicts a schematic sectional view of an electrode layer according to the invention, wherein porous microparticles have been dye-sensitized; and

FIG. 4B     is an enlarged sectional view of active material interface; and

FIG. 4C     is a perspective view of the selective coating at the surface of microparticles with a percolating network of binder and conductive particles;

FIG. 5 depicts a schematic sectional view of a multilayer slot die coater used to cast in one step e.g. a battery with mesoporous microparticles of the invention.

FIG. 6A shows a perspective view of a band with slot die casted multiple photoelectro-chemical cells; and

FIG. 6B depicts a Z-folded triplex photovoltaic cell; and

FIG. 6C depicts a concentrically rolled triplex photovoltaic cell.

FIG. 7 depicts a schematic cross sectional view of prior art electrochromic display electrode, i. e. digital segments in an digital display.

FIG. 8A shows a perspective view of a wire-shaped flexible electrochromic device used e.g. in the form of an adressable digital display; and

FIG. 8B shows a schematic sectional view of such electrochemichromic display cell.

FIG. 9 depicts the pore size measurement of microparticles from Exemple 1 by nitrogen porosimetry using the desorption isotherm.

FIG. 10 shows the conductance of pristine $TiO_2$ at different lithium intercalation levels compared with the conductance of 2% niobium-doped $TiO_2$.

## DETAILED DESCRIPTION OF THE INVENTION

The following sections describe, in turn, the relevant aspects of electrochemical interfaces behaviour, the microparticle formation process, and electrode and devices formation using the process. These are followed by descriptions of apparatus used in the process and examples of the process and the resultant products. Various background references are cited parenthetically in this description and are incorporated by reference herein to further explain to practitioners of powder formation and coating arts certain details of the present invention with which they presently are not ordinarily familiar.

1. Electrochemical interfaces

The electrochemical devices which can benefit from the improvements of this invention include all known apparatus using thin layer cells, i.e. batteries, electrochrome, photochrome and photovoltaic cells, where the control of ionic and electronic interactions at the interface of electrodes is driving the electrochemical performance.

In order to allow the electrochemical device to efficiently transport electrical current, ionic and electronic carrier species must be rapidly supplied to- or removed from- the electrode/ electrolyte interface. Rapid kinetics is accomplished by using electronically conductive active material with sufficient porosity to allow ions to easily reach a free zone of the interface. The porosity in the form of mesopores is optimised to avoid an excess of electrolyte vs. active mass that would decrease energy density of the device.

The interfaces of previous art electrochemical devices are shown in FIG. 2 and FIG. 3. With reference to FIG. 2 already described, the electrode / electrolyte interface 26 / 25 of an electrochemichromic device 21 of previous art was limited by the surface area of the rough semiconductor film 27. With reference to FIG. 3 already described, the electrode / electrolyte interface 33 / 39 of an electrochemical generator device 31 of previous art was limited to the low surface area of the electrode, wherein most of the accessible porosity of the electrode is dogged by the compressed binder. Furthermore, the active mass / electronic conductor interface 33 / 35 was partly interrupted by particles of the insulating binder 34.

Different requirements are put on the materials constituting the interface, depending on the type and rate of transport needed, which varies from one type of device to the other. Generally for electrochemical processes where the rate-limiting step is at the interface, higher rates require larger interface area.

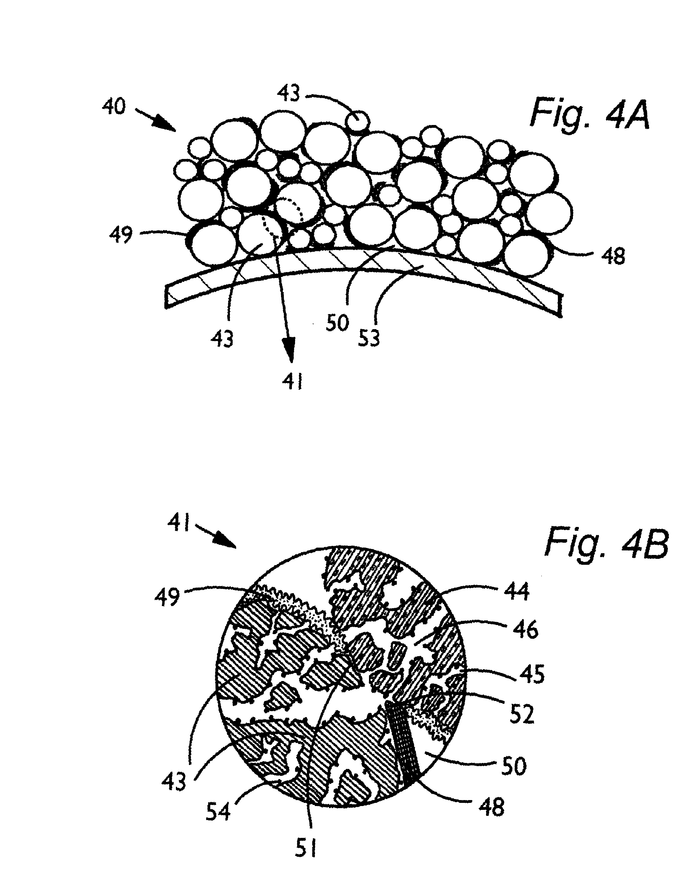

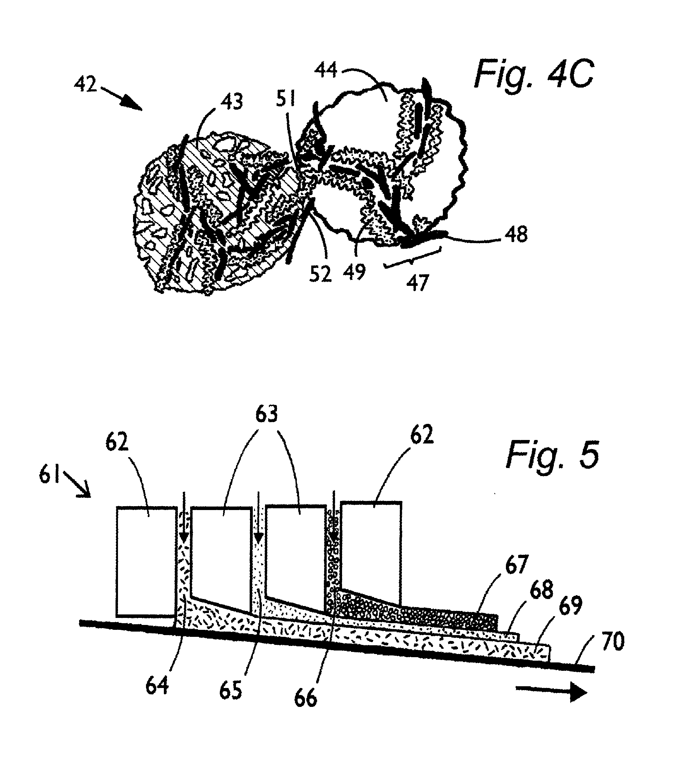

This invention permits to organize the interface in the form of solid porous discrete particles, of which specialized domains will occupy each a specific relative area of this interface, as depicted in FIG. 4.

With reference to FIG.4A, an electrode of the invention 40 is composed of bimodally mesoporous microparticles 43 which are dispersed in contact with one another and in contact with a current collector 53, throughout a sparsely coated binder 49 that retains the microparticles.

Optionally, electrically conductive particles 48 are dispersed in the binder and are coated in a patterned way, so that after curing conductive particles in contact with one another form a percolating network.

An electrolyte 50 is retained in the voids between the microparticles as well as in intra-particle pores. A denser filling can be obtained by using microparticles of a range of sizes. With reference to Fig.4B, an enlarged cross section 41 of an electrode shows two porous microparticles 43 and 44 in tight direct contact 51. Small mesopores 45 and larger mesopores or macropores 46 linked to inter-particular electrolyte channels 50 provide a efficient ion conduction network, and correspond to the largest domain of the area of microparticles. Linking means between the particles are assured by binder 49, which can also be intrinsically conductive, and conductive particles 48 that provide an interconnected network in tight contact 52 with the microparticles. This percolating electron conduction network occupies a small domain, only at the external surface of the particles, leaving most pores directly accessible to the electrolyte; the conductive network assists the charge percolation also assured by the semiconductive active microparticles. Optionally, dye molecules 54 are attached on the internal and external surfaces of the particles.

The main domains occupying separate areas in each discrete particle are interconnected at the time of electrode formation to form two specialized percolating bicontinuous networks, one for electronic transport, the other for ionic transport, with the electrically active material at the interface between these two networks. Further non interconnected domains can be allocated for additional functions like mechanical binding or photonic conversion..

This organization of tri-dimensional interfaces requires a manufacturing process that has more steps than for two-dimensional films, but that permits to use mass production processes and to form electrochemical devices that have more useful functionalities, among which the mechanical flexibility of the electrodes allows a scalable roll-to-roll production mode and new useful device designs.

One of the advantages of this new processing method is that the materials built at each step can be processed in the next step in successively milder conditions that preserve the structures previously built, in particular the structure of the mesopores and where also applicable of the nanorods.

Each of the domains of the interface can be built in a successive step of the process of the invention, so the specialized area occupied by each function can be adjusted by setting independent processing parameters.

The manufacturing process of the invention allows the independent control both of:

- (i) the absolute area of the interface and
- (ii) the relative importance of the specialized domains of this interface, as a function of the demand on the type and rate of transport needed at the interface.

> (i) A first control is on the total area through the porosity of each particle.
> The porosity brought by the initial synthesis of sol particles can be reduced and optimized by the process step of sintering the microparticles; the degree of sintering is controlled by the temperature, duration and optionally the concentration of a porosity forming aid that is eliminated after the initial particles have undergone necking.
> (ii) A second control is on the relative area occupied by domains on each particle. The process step of coating the surface of porous microparticles with a patterned layer of a latex composed at least of polymeric linkers and fine conductive particles permits to control the relative importance of the different domains.

2. Microparticle formation process

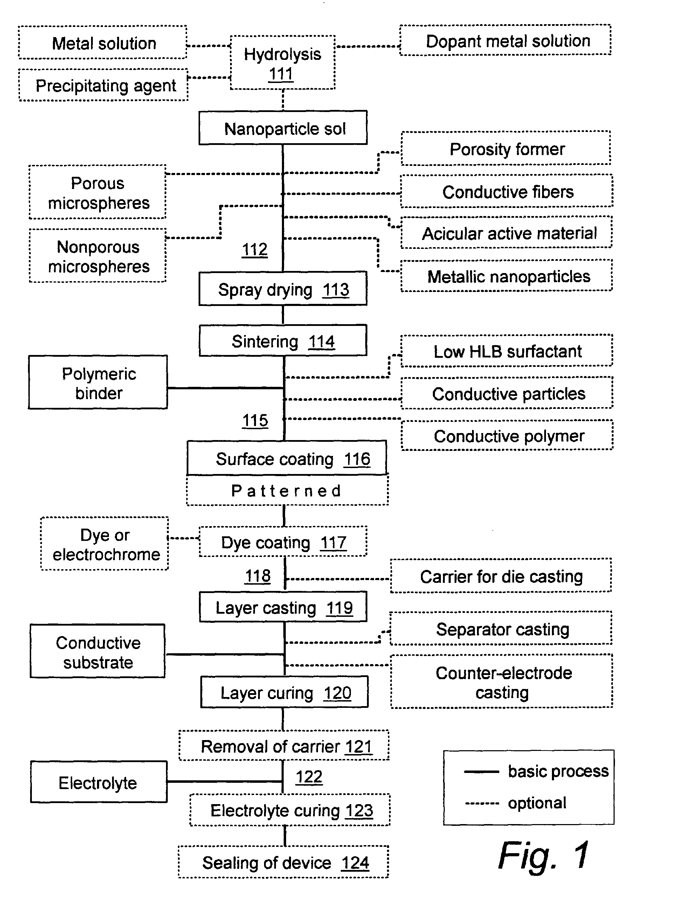

The process of the invention to form mesoporous microparticles shown schematically in FIG. 1 generally comprises: (112) preparing a slurry of a sol of nanoparticles having a first mesoporous structure, optionally with additional compounds, (113) drying and agglomerating this slurry in the form of droplets, (114) sintering under controlled conditions the agglomerated slurry into solid particles having a secondary porous structure, while keeping part of the primary mesoporous structure, (115) mixing together a suspension of an organic linking latex and optionally fine conductive particles and/or with a conductive polymer; and (116) coating the outer surface of the microparticles with a patterned layer of polymerisable or curable binder.

The initial building block in step (112) is a sol of nano-crystallites of the electrically active material that have a lower melting point than equivalent larger particles, due to their higher surface-to-volume ratio.

When the crystallites are sintered into larger porous secondary particles, the melting point of these secondary particles increases, thus providing a limited melting between neighbour primary particles, that permits a precise control over the degree of sintering and thereby over the mesoporosity.

A bimodal porosity can be thus attained, with small intra-particle mesopores and large inter-particle mesopores that permit a rapid diffusion of ions across the high surface solid-electrolyte interface and through the electrolyte to the inner mesopores. An embodiment of this first aspect of the process, relying only on the self-organization of nanoparticles, is given in Example 1. The optional step of synthesis of nanoparticles (111) is performed there by mixing together a metal solution such as a metal salt solution and a solution containing a precipitating agent to form a mixed solution that undergoes hydrolysis.

It should be noted that the nanoparticles never need to be handled in the form of a dry inhalable powder, hereby assuring a high safety and convenience to this process.

Where needed for a more rapid ion diffusion through large pores, an option to step (112) of the process using a porosity forming aid also permits to obtain an inter-particle mesoporosity beyond the limit of 50 nm, thus providing a bimodal or trimodal distribution with macropores. An embodiment of this aspect of the process is given in Example 2. The nature of the porosity forming aid is not limited to the chemical used in the Example, but any dispersible chemical that can be volatilised at the sintering temperature, e.g. carboxymethyl cellulose, methyl cellulose, hydroxymethyl cellulose, ethyl cellulose, polyvinyl alcohol, polyacrylic acid (or polyacrylate), oxidized starch, phosphorylated starch, casein, can be used for this purpose.

Most chalcogenides, hydroxides, oxyhydroxides, oxohydrides or thiocyanic acids of transition or non-transition metals that are synthesized as nanomaterials are amenable to a bimodal mesoporous microparticle form by the process of the invention.

A further level of control over mesopore formation in the optional step (111) of the process is provided following the finding that doped nanocrystallites have a higher melting point than their pristine equivalent, are stabilized and can be processed accordingly. Doped active materials are those wherein the pristine structure has been modified by the substitution or addition of atoms of transition or non-transition metals, forming e.g. a solid solution.

The present invention is not limited with respect to the type of dopant material or the level of dopant material that can be employed.

One of the advantages of doping in this process is to provide when needed stabilized electrically active materials with a higher melting point than pristine ones, that will lead upon microparticle formation to the incorporation of smaller crystallites of higher active surface. An embodiment of this aspect of the process is given in Example 3.

Controlled mixtures of pristine and doped nanoparticles of the same electrically active base material can also provide an additional advantage of doping, the pristine particles serving in sintering as a lower melting temperature flux to bind larger doped particles, e.g. nanorods, in a mesoporous microparticle of the invention.

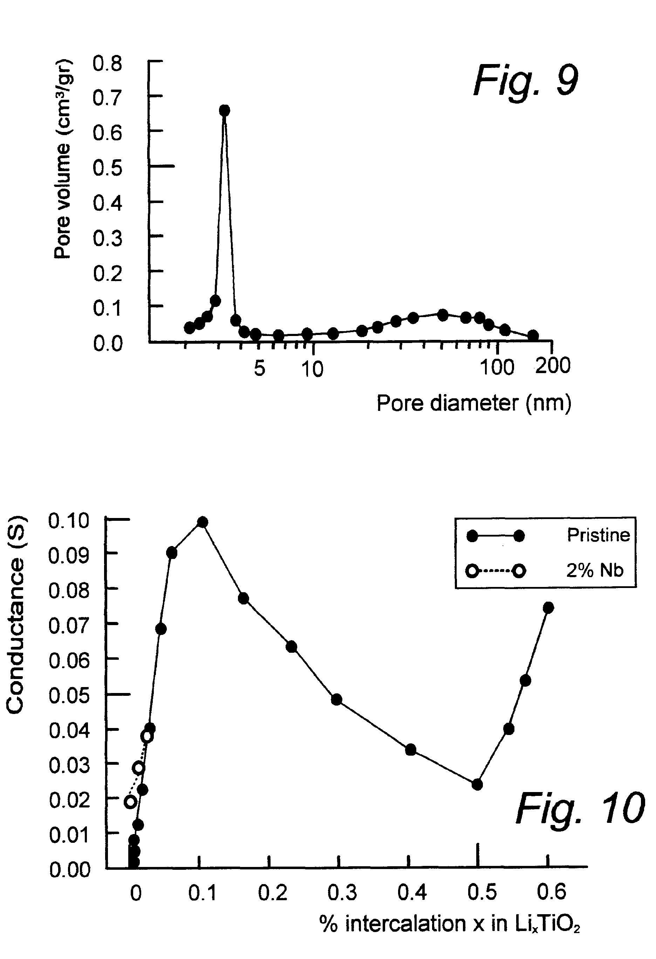

A further benefit of doping mesoporous oxides is to obtain electrically active semiconductor materials with shifted redox potential (the Fermi level) that will allow to modify the voltage of the cell and their conductivity, allowing hereby to build electrochemical cells with a tailor-made intercalation potential. With reference to FIG. 10, pristine $TiO_2$ at low lithium intercalation levels has an extremely low conductance, that would impede the recharge of a fully discharged battery. When doping $TiO_2$ at less than 3 % of e.g. niobium, the conductance is increased by more than 3 orders of magnitude (nominal resistivity of $TiO_2$ is $10^8$ Ohm/cm). An embodiment of doping with niobium is shown in Example 4.

In prior art, semiconductor metal oxides and oxyhydroxides have been used for their reversible electrochromic behaviour upon intercalation and de-intercalation of ions, particularly hydrogen or lithium, see Pat. EP461970 , in windows, see e.g. US Pat. No. 5,410,426, or in displays, see e.g. US Pat. No. 6,104,372. This type of active materials have obviously also an interest as accumulators. Like for materials shown in Example 4 and FIG. 10, doping gives them a metallic character that assures their conductivity even when the intercalating ions are fully removed. New doped ion-intercalating active materials that have simultaneous electrochrome-accumulator properties can be easily manufactured by bringing minor changes to the process of the invention. An embodiment of this aspect of the process for a doped oxyhydroxide is given in Example 5. Oxyhydroxides of titanium are known as electrochromes only, see e.g. Pat. EP461970 with titanium oxyhydroxide of formula: $H_2 Ti_3 O_7$ and also as accumulators only, see e.g. US Pat. No. 6,120,938 with titanium oxyhydroxide of formula: $H_x Li_{y-x} Ti_z O_4$ (where $y{\geq}x{>}0$, $0.8{<=}y{<=}2.7$ and $1.3{<=}z{<=}2.2$), with lithium titanate $Li_{1.33} Ti_{1.66} O_4$ as precursor and lithium and protons exchanged for each other. The combination of electrochrome-accumulator properties in the same material would additionally be of interest for an indicator of a state-of-charge of the battery, as recently described for simple lithiated titania in US Pat No 6,104,372: the surface of a charged battery anode is blue and when fully discharged turns white.

For battery cells in particular, with a careful choice for doping at least one electrode an increase of their energy density will be gained.

A particularly favourable situation is when both the ion intercalating anode and cathode are doped in a way that provides a more negative anode potential closer to that of lithium and a higher cathode potential, such as the resulting cell potential is increased, together with an increase of cell energy. Many cathode compounds with a potential higher than 4.5 V vs. lithium and compatible with the anodes of the invention are known. Known high voltage cathodes, see e.g. US Pat. No. 6,017,654, 5,631,104, 5,871,866, 6,004,697, were based e.g. on double metal ion doped spinels, inverse spinels ($LiMVO_4$), olivine-type phosphates ($Li_3 M'M''(PO_4)_3$ ), like e.g. $Li_{1.10} Ni_{0.75} Co_{0.25} Mg_{0.10} O_{2.2}$, $Li_1 Ni_{0.75} Co_{0.25} Mg_{0.10} O_p$ ($2.1{<=}p{<=}2.2$), $Li_1 Cr_{0.5} Mn_{1.5} O_4$, $Li_{1.2} V_{2.8925} Zr_{0.1075} O_{7.9} F_{0.1}$., $LiCoPO_4$

An embodiment of this aspect of the process showing an electrochemical generator device is given in Example 15.

Additionally, another aspect of the present invention is to be able to build microparticles that comprise nanorods of electrically active material that allow to obtain a highly ordered packing structure, with elongated mesopores of low tortuosity, favourable for fast ion diffusion, for an improved mechanical stability and also for a better electronic conduction. The process of the invention presents the aspect of being able to build microparticles that also embed electrically conductive fine particles, based on e.g. carbon whiskers, nanotubes, carbon black, graphite, colloidal metals or metallic nano-fibers. These electrical conductors make in each secondary particle an intimate contact with the electrically active material sintered around them.

These conductors permit to build a very efficient conductive network that equalizes the potential throughout the active material, prevents a voltage drop attributable to the internal resistance and the exposure of the electrolyte to excessive voltages. This function is even more critical for cells in which the electrically active materials are doped and supply high cell voltage, together with an increased energy capacity.

An embodiment of these aspects of the process is given in Example 6.

The process of the invention also presents the aspect of being able to build microparticles that comprise larger dense microparticles that can be conductive or not. One of the preferred form is low porosity microspheres that can be coated with the mesoporous coating of the invention and hence form microparticles with a differential porosity, with a dense core and a mesoporous surface. This graded porosity is particularly useful for photochemical or electrochromic applications where light can only penetrate through a limited thickness of dyed porous material and would even be favourably reflected by the dense core. An embodiment of this aspect of the process is given in Example 7.

Another aspect of the invention allows to build porous particles in the form of heterogenous active compounds assembled either as an homogenous mixture of compounds of different chemistry in a single particle or a coated layer of one of the compounds over a porous particle constituted with another compound of a different chemistry. An embodiment of this aspect of the process is given in Example 8.

Still another aspect is including electrically active materials, e.g. metals, that can be linked together by the primary mesoporous nano-crystallites of the initial suspension and sintered and electrically interconnected into composite solid porous microparticles. An embodiment of this aspect of the process is given in Example 9.

The process of the invention also presents the aspect of being able to provide porous microparticles with a defined shape, e.g. spherical or acicular or flaky, i.e. with an aspect ratio of at least 3. Spherical particles allow for a particularly dense filling, while acicular particles provide an enhanced adhesion and electronic transfer. Flaky particles engage and contact one another in edge-to-edge or overlapping relationship. Flaky particles are obtained by impacting the spray-dried stream of microparticles on a rotating drum coated with an anti-adhesive layer, e.g. PTFE, and scraped off. Embodiments of these aspects of the process are given in Examples 1 and 10.

The process of the invention also presents the aspect of providing porous microparticles with a composite partial coating constituting specialized domains. Of particular interest is a heat-settable polymer that has adhesive or electrically conductive properties or is both adhesive and electrically conductive, or mixtures of such polymers. The spherical or flaky microparticles obtained in the previous steps of the process of the invention are soaked with a filler to limit a diffusion into the pores, then mixed with a suspension of the desired polymer forming a latex and a surfactant component, optionally with conductive nanoparticles, and are processed in a two-phase spray-drying equipment. A rapid heating and cooling phase of the flying microparticles allows to collect discrete particles selectively coated with the binder.

FIG. 4C shows a perspective view of the surface of two adjacent microparticles 43 and 44. There is a difference in surface activity between the porous particles (43, 44) surface and the conductive particles aggregated at the surface (48). The porous particles have higher energy surfaces than graphitic particles or binding polymers. During the rapid evaporation of the solvent, low hydrophilic-lipophilic balance (HLB) surfactant molecules sparsely soluble in water are organized with their polar heads towards the surface of the particle and their lipophilic tails towards the compounds of lower surface energy. As water evaporates and the temperature increases, the concentrated surfactant collects particles into ponds that contain a high concentration of binder. These ponds with a high content of solids are preferentially composing veins (47) along superficial conductive particles 48, forming a patterned coating of concentrated binder (49) and leaving the pores of the microparticles substantially free of binder.

Furthermore, the degree of this partial coverage on the surface of the microparticle can be controlled by the degree of dilution of the latex containing the binder, and also by the ratio between the interfacing surface of conductive particles and the external surface of the microparticles.

During the subsequent curing of electrode, the veins 47 of heat-curable binder and conductive particles are interconnected from particle (43) to particle (44) to form a percolating network. Part of the detergent is vaporized during the curing phase and is optionally extracted afterwards for less volatile detergents. The slightly protruding particles of electrical conductor 48 will be preferentially pressed on opposite faces of the microparticles of the invention during thermal lamination of the electrode, ensuring an enhanced electrical contact (52). Numerous direct electrical contacts add conductivity, from particle-to-particle contacts (51) and between particles and the current collector 53 also with a patterned coating of adhesive (not shown). This multiplicity of interconnexions by a continuous web provides a superior flexible adhesion and low-resistance electronic transport.

This not only reduces the quantity of coating material that would otherwise be needed to cover the whole surface, but also brings substantial electrochemical improvements coming from a greater portion of the surface directly accessible for ion diffusion.

This binder is a polymeric material which preferably is resilient and not brittle, chemically inert, temperature resistant, has a low coefficient of thermal expansion, is thermoplastic or can be polymerised or otherwise cured. A suitable binding material can be selected from the group of polymers consisting of: polyvinylidene fluoride, polytetrafluoroethylene, fluororubber (which is a terpolymer of tetrafluoroethylene, vinylidene fluoride and hexafluoropropylene), polyvinyl polymers such as polyvinylpyrrolidone, polyamides, polyurethanes; ethylene acrylic acid (EAA) copolymers, ethylene methacrylic acid (EMAA) copolymers, polyethylene (PE), polypropylene (PP), ethylene-propylene-diene terpolymers (EPDM), polybutylene, ionically cross-linked ethylene methacrylic acid copolymer, ethylene n-butyl acrylate (EnBA) polymers, ethylene vinyl acetate (EVA) polymers, ethylene ethyl acrylate (EEA) copolymer, ethylene methyl acrylate (EMA) copolymer, bisallylnadiimide or allylnadiimide, polysulfones, polyethersulfones, polyimides, polyamide-imides, epoxy resins, polyarylene ether ketones such as, chloromethylated polyarylene ether ketones, acryloylated polyarylene ether ketones, a nitrile rubber, an ethylene-propylene rubber, a styrene-butadiene rubber, polyetherimides, polystyrene, and the like and cholromethylated polyethersulfones and acryloylated polyethersulfones, polymethyl methacrylate, a polysulfide rubber, cyanoethyl cellulose, methyl cellulose, and oligomer and blends thereof.

It is preferred that the polymer material have a functional group having a strong polarity, for example acrylic resins and fluororesins. The binder should constitute no more than about 5 percent by weight of the particle, more preferably less than about 3 percent by weight of the particle.

Furthermore, intrinsically conductive polymers can be blended with or substitute previously mentioned non-conductive binder. They can be selected from the group consisting of: polyaniline, polythiophene, polyphenylene, polypyrrole, polyacetylene, polyisothionaphthene, poly(phenylene sulfide), poly(p-phenylene), polyethylenedioxythiophene (PEDOT), poly(phenylenevinylene), poly(heterocycle vinylene), substituted derivatives thereof, co-polymers thereof and blends thereof.

An embodiment of this aspect of the process is given in Example 11.

Carbon conductive particles can be replaced by transparent conductive oxide particles, fine metallic particles or conductive polymers, particularly for transparent electrodes used in photoelectrochemical cells.

An embodiment of this aspect of the process is given in Example 12.

Water-soluble heat-settable adhesives are preferred for their optimal adhesion on the polar surface of the microparticles, their low environmental impact and the safety assured during a manufacturing with non-flammable reagents in contact with high surface electroactive particles.

3. Apparatus used for microparticle formation

The technique of spray drying is well known and is described in detail in Perry, "Chemical Engineers' Handbook," pages 20-51 (6th edition, McGraw Hill & Co., 1984). A spray drying system includes the following components: a suspension droplet generator, a flow reactor to pass the suspension droplets through, and a particle-collection set-up for collecting the agglomerated powder, then a sintering oven converting the agglomerated powder into discrete solid porous microparticles of the product.

It is obvious to those skilled in the art that various types of droplet generators, respectively, spraying configurations such as atomizers, spray or electrospray nozzles, nebulizers, ultrasonic aerosol generators, etc. can be used. Of course, different types of carrier gases (compressed air, oxygen, nitrogen, supercritical carbon dioxide, etc. and mixtures thereof) and volatilizable solvents can be employed. Environmentally benign and safe solvents, based on water or biodegradable alcohols are preferred.

In spraying, the droplet size is controlled by modifying the rheological properties of the feed solution through solvent dilution or addition of thickeners and by changing spray conditions (nozzle geometries, gas and solution pressure or temperature).

Different types of droplet generators can provide a more or less high degree of dispersion of droplet size, and thus of the mesoporous particle size. In the best case, monodisperse particles can be obtained, that are of advantage for electro-optical devices like solar cells and electrochrome displays.

Aggregation into microparticles is achieved by an exposition to a co-current of dry hot air, with the volatilisation of the solvent, mostly water. Sintering can be achieved either supported by the other microparticles or other non-adherent particles in a stirred oven, or preferably in an high precision un-supported manner, e.g. in a fluid bed reactor heated e.g. by hot air, narrow spectrum infra-red or rapid thermal alloying (RTA) sources. The free-flowing powder is then cooled before further processing. In a supported mode, heat transfer is less homogeneous, so microparticles experience a broader range of temperature conditions. After sintering, the non-adherent particles are separated from the solid mesoporous particles, e.g. by size or density.

A cooled non-adhesive rotating drum accessory interposed on the trajectory of the particles of the spray-dryer can also be used to produce upon impact free-flowing mesoporous flaky particles, re-shaped from their still plastic aggregated state, before definitive sintering. Example 10 illustrates an embodiment of this aspect of the invention.

4. Electrode and electrochemical device formation

The solid bimodal mesoporous particles selectively coated with adhesives and electrical conductors obtained in the steps (111) to (116) of the process of the invention have superior features that allow their further forming into electrodes and electrochemical cells by simple and economical further steps depicted in FIG. 1.

These steps to complete the formation of an electrochemical device generally comprise: (117) optionally coating the inner surface of the microparticles of the invention with a sensitizer, dye or redox chromophore, where applicable, (118) impregnating the pores of the microparticles with a filler, e.g. an aqueous solution or components of the electrolyte, and mixing with a carrier permitting to obtain the desired rheology, (119) casting a first electrode layer by placing the coated discrete particles in contact with a first electron conductor, optionally casting simultaneously same electrode layers of a different composition, or the other electrode and/or the separator, (120) heat-setting or otherwise curing the coating binder, (121) removing the carrier and drying the electrode, (122) filling the electrolyte, (123) optionally curing the electrolyte, and (124) sealing the device.

The system for performing the inventive electrode forming method consists of a coating and lamination equipment well known by those skilled in the art. Also, methods for :

- (i) coating sensitizer or dye (step 117) and for
- (ii) preparing solid, solvent-containing or solvent electrolytes (steps 122 and 123) are well known in the art.

(i) Sensitizer, dye or redox chromophore coating on discrete porous particles can be performed by impregnation, fixation and washing of excess reagent, this with a improved homogeneity only on well-adherent sites, so no loose dye molecules are produced.

(ii) Solid electrolytes generally comprise a solid polymeric matrix and an inorganic ion salt, optionally an electrolytic low volatility solvent, a film forming agent and for photoelectrochemical cells a redox couple. They are generally prepared from solid matrix-forming monomers aliphatic carbonates that are cured after coating or from the solution of the solid electrolyte in a volatile solvent that is evaporated after the coating.

For solvent electrolytes, low volatility liquids e.g. selected from molten salts or immobilized in a high molecular weight polymer are preferred.

In step (118), mixing the coated microparticles with a volatile carrier that does not dissolve the linking polymer or dye, for example dibutyl phthalate, dioctylphthalate, and acetates, hexylene carbonate, octylene carbonate, tributyl phosphate, glymes and low molecular weight polymers, is necessary for obtaining a composition with the desirable rheology, eventually cooling or heating the composition so as to provide for a coatable material.

Those skilled in the art will understand that some adjustment of the viscosity and rheological properties of the solution may be needed to accommodate a particular application technique and that such adjustment can be effected by varying the molecular weight and/or concentration of the carrier.

In step 119, discrete adhesive mesoporous particles of the invention can be coated onto a suitable substrate (e.g., a metallic or transparent conductive oxide electrode) by any method of deposition from a dispersed state, including: premetered coatings such as patch die coating, slot or extrusion coating, slide or cascade coating, and curtain coating; roll coating such as knife over roll coating, forward and reverse roll coating; gravure coating; dip coating; spray coating; meniscus coating; spin coating; brush coating; air knife coating; silk screen printing processes; electrostatic printing processes; thermal printing processes; ink jet; and other similar techniques. The premetered coating methods are particularly preferred for their high productivity. This aspect of the process with an embodiment using a multilayer slot die coating is depicted in FIG. 5.

The die 61 comprises fixed walls 62 and adjustable walls 63 that delimit slots in which coating fluids 64, 65 and 66 are pumped. Three layers 67, 68, 69 of adjustable thickness depending on the relative geometrical parameters, physical fluid properties and operating conditions are built simultaneously on a conductive means 70, optionally bonded on a sealing means (not shown). For example, a cathode layer 67 and a separator layer 68 on top of an anode layer 69 can be simultaneously coated together on a flat current collector 70 of an electrochemical generator. An embodiment of this aspect of the invention is given in Example 13.

In another embodiment of the invention, the conductive means can be a wire or ribbon, over which concentrically superposed layers are die extruded, as in Example 17.

A major portion of the particles with the polymer coated thereon are interfacing with each other and with the surface layer of the conductive member of each electrode.

With reference to FIG. 1, bonding of the porous layer of microparticles in step 120 is achieved with heat and/or pressure, polymerising the patterned coating into a network of solid phase material extending from the current collector. Microparticles remain discrete particles, but are electrically linked to each other by direct contact, by the percolating network of conductive fine particles and optionally by conductive polymers.

For an individual electrode, the full cell can then be assembled by lamination with a separator and the counter-electrode. The electrolyte is filled in step 122, optionally cured for a solid electrolyte in step 123 and the cell can be sealed in step 124, such procedures being well known by those skilled in the art.

Suitable polymerization and cross-linking (i.e. curing) conditions for steps (120) and (123) are well known in the art and include by way of example, heating the monomer, irradiating the monomer with UV light, electropolymerization, electron beams, etc., together with pressure. Excess electrolyte will be expelled from between pressing plates and can easily be trimmed off after the electrode is cured.

An embodiment of this aspect of the process is given in Example 13.

It should also be recognized that all of the processes required could be carried out in either batch or a continuous form. Continuous processes are usually advantageous from an economic standpoint and can readily be used with the procedure described. Another substantial industrial, safety and environmental advantage of the process of the invention is that water-based solvents can be selected for most steps and all reagents can be recycled. Specific embodiments of electrochemical devices built using the process of the invention, i.e. an electrochemical generator, a photoelectrochemical cell and a electrochemichromic display are given hereafter.

5. Embodiment in electrochemical generators

Electrochemical generators of the invention with superposed casted thin layers composed of porous microparticles, as shown in FIG. 5, allowing to combine (a) an efficient access of ions to the large inner mesoporous surface of the particles through a well interconnected electrolyte channel network with (b) a distributed and well percolating conductive network, thereby giving a high power. Furthermore, the patterned binder coating and the large area of the interface allow a full usage of the active material, thereby giving a high capacity.
The anodic chalcogenides, hydroxides, oxyhydroxides, oxo-acids, oxohydrides or thiocyanic acids of non-transition or transition metals and their doped forms provide a highly safe material, exhibiting a difference of potential of about 1 V vs. lithium. This prevents any formation of metallic lithium during charge and protects the electrolyte from the formation of residues from reduced electrolyte. This absence of electrolyte degradation, which in carbon-based batteries is considered to be part of a "cell formation" process and consumes up to 15% of the capacity, also protects the cathode from premature residues contamination. High voltage cathodes known in the art can profitably be combined with mesoporous anodes to yield high capacity / high power batteries that exhibit a high number of cycles. Novel electrolytes that would be instable on an active carbon surface can be used. A new type of separator composed of patterned pre-adhesived porous inert particles allows a full integration with the manufacturing process. An embodiment in an electrochemical device of the invention is given in Example 15.

6. Embodiment in photoelectrochemical cells

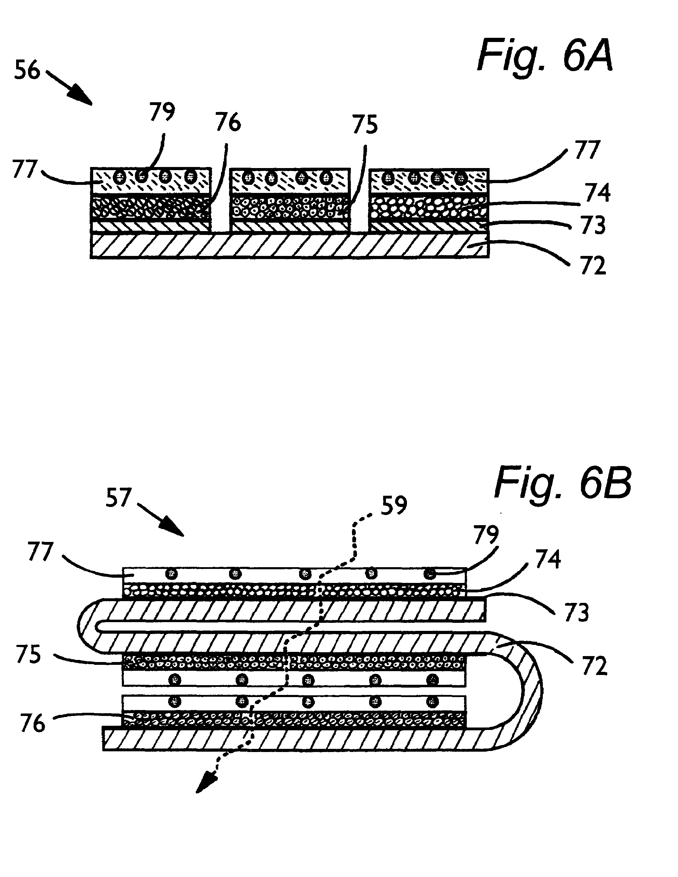

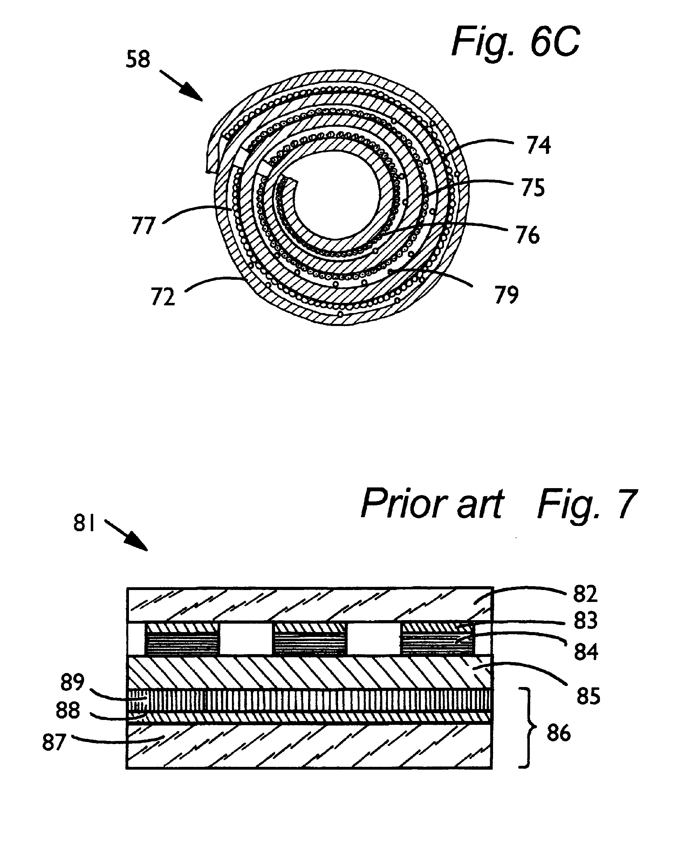

Many metal oxide particles can be fabricated to be transparent. The present invention using discrete mesoporous particles is a distinct improvement over electrochemical photovoltaic cells of prior art. (see FIG. 2).
Most components of a dye solar cell are known since the late 1970's and were described e.g. in US patents (numbers in brackets): $TiO_2$ as a UV photorespon-sive n-type semiconductor on antimony-doped $SnO_2$ and a Pt or carbon counter-electrode, with electrodes of maximum surface area (3,628,017), use of halides as photo-regenerative mediators (3,879,228), an interlocking finger arrangement of the electrodes (3,989,542), use of iodine/iodide redox couple (4,021,323), the photoelectric enhancement of $TiO_2$ particles into visible by a dye in the electrolyte (4,080,488), use of polymer ion conductor electrolyte (4,352,868), dye chemisorbed on the surface of the semiconductor 3,900,945, Tsubomura H. et al.: Nature 261 (1976) 402, Kalyanasundaram et al.: J. Phys. Chem. 91 (1987) 2342-2347, and ruthenium-complex based dyes (4,684,537).
Discrete electroactive particles allow to collect incoming diffuse light from a large angle, to combine complementary dye types in a cell in a plurimodal association, as shown in Example 16, or to superpose cells with similar or different dyes e.g. in tandem or triplex cells. New types of flexible photovoltaic cells without expensive rigid conductive glass are obtained hereby.
Referring to FIG. 6A, flexible cells can be produced economically with a roll-to-roll slot die process from a sheet 56 bearing parallel individual electrodes bands. On a flexible barrier film 72 selectively coated with a transparent conductive oxide 73, three different dye-sensitised microparticle semiconductor oxide layers 74, 75 and 76 are slot die coated, together with a segmented separator layer 77; optionally, the first layer 74 can remain undyed to harvest UV light. After embedding carbon-coated wires 79 on top of the separator and closing with another flexible barrier film (not shown), the photovoltaic cell is laminated. After filling with the electrolyte, optionally curing for a solid electrolyte, and sealing, the group of cells can either be Z-folded into a flat stack 57 (see FIG. 6B) or rolled to get a cylindrical stack 58 (see FIG. 6C), which does not require the second barrier layer .
Energy from polychromatic light 59 can be successively harvested at different wavelengths and converted into a higher voltage for triplex cells connected in series. Optionally, the transparent conductive oxide 73 can be substituted by parallel conductive wires when the conduction of the semiconductive layers 74, 75, 76 are reinforced by a network of conductive particles.

7. Embodiment in electrochemichromic cells

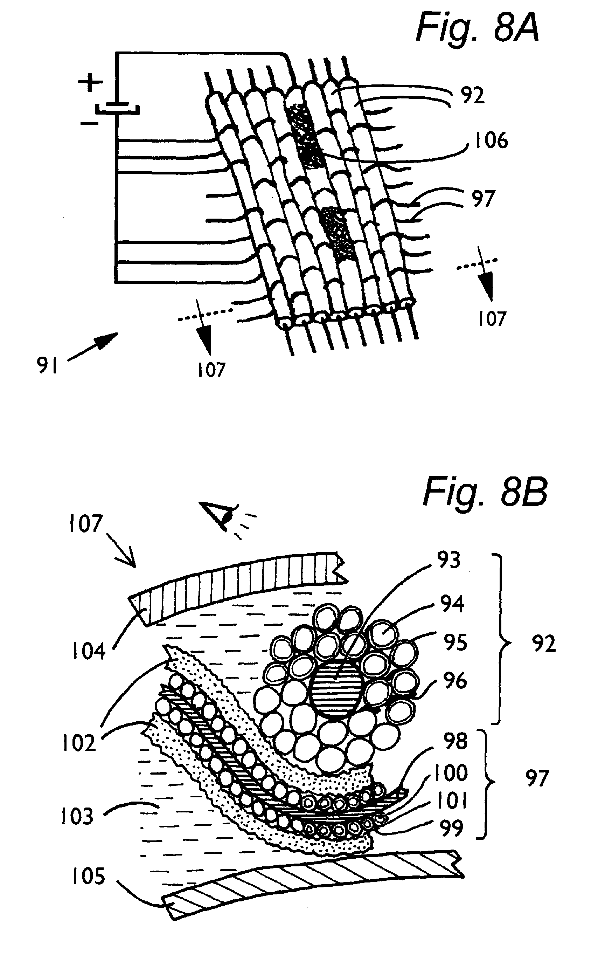

The present invention using discrete mesoporous particles is a distinct improvement over electrochemichromic cells of prior art. Referring to FIG. 7, a prior art digital display 81 comprising digital segments is composed of a transparent or translucent substrate 82, e.g. glass with a segmented conductive film 83, e. g. tin oxide, and a segmented electrochromic film 84. The counter-electrode 86 may comprise a conductive substrate, which may be a metal sheet or a glass substrate 87 with a conductive film 88 and a film of counter-electrode material 89 such as carbon, tungsten oxide or the like. A layer of ion-conductive polymer 85 is electrically interconnecting the electrodes.

Electrochemichromic electrodes can be built either from intrinsical electrochromes that change slowly color with ion intercalation or from conductors that bear attached on their surface rapidly oxydo-reducing compounds, as will be shown hereafter.

Most components of an electrochromic display are known and were described e.g. in US patents (numbers in brackets): Ion conductors and discrete digits (3,521,941), anodic and cathodic coloring components that comprise redox couples selected to exhibit the reversible reaction: (at rest) reductant A (colorless, at anode) + oxidant B (colorless, at cathode) $\leftrightarrow$ (voltage applied) A oxidized (colored, at anode) + B reduced (colorless or colored, at cathode) (3,806,229), (4,093,358), (4,139,276), pigment dispersion in electrolyte (4,335,938), solid electrolyte (4,550,982), solid film holding a colorant "Nanostructured $TiO_2$ Semiconductor Electrodes Modified with Surface Attached Viologens: Applications for Displays and Smart Windows" by Anders Hagfeldt, Lorenz Walder and Michael Graetzel, Institut de Chimie Physique, Lausanne, Switzerland, SPIE vol. 2531, pp 60-69, pub. 1995.

Discrete electroactive particles interfaced with a transparent or translucent organic matrix allow either when un-reacted to reflect incoming light from a large angle or when reacted to absorb light in precisely located electrochromic coloring species.

For this type of application, an aim is to obtain an electrochromic surface with the smallest possible volume, so a porous electrically conductive substrate is preferred.

Referring to FIG. 8A, an interlaced structure composing an electrochrome matrix display 91 is made from die-extruded electrodes 92 and counter-electrodes 97, laminated in a transparent barrier packaging (not shown). Referring to FIG. 8B, a sectional view 107 details the structure of anodic electrodes 92 composed from conductive wires 93 linked through a binder 96 with microparticles 94; an anodic electrochromic compound 95 is attached on their surface. Cathodic electrodes 97 composed of a conductive wire 98 linked through a binder 99 with microparticles 100; optionally, a cathodic electrochromic compound 101 is attached on their surface. A transparent ion-conductive layer 102 separates the electrodes, of which the crossing points of the interlaced weave constitute the individually multiplexed pixels 106. An electrolyte 103 permeates and surrounds the electrodes and separator, which are sealed between flexible barrier layers 104 (see-through, transparent or translucent) and 105.

A direct current power source such as a battery is connected to make the counter-electrode negative for coloring the electrochromic layer 96 or positive to erase or bleach the same layer, composing the pixels 106.

Flexible cells can be produced economically with a roll-to-roll lamination process.

An embodiment of a chromoelectrochemical display of the invention is shown in Example 17.

EXAMPLES

The following examples are offered to illustrate the present invention and should not be construed in any way as limiting its scope.

All reagents in Examples were obtained from Merck (Germany), unless stated otherwise. Parts used for the solvents are by volume and for solids by weight.

EXAMPLE 1 Mesoporous spherical microparticles without porosity forming aid

A colloidal $TiO_2$ dispersion was prepared by hydrolysis and condensation of titanium tetraisopropoxide (TTP). 0.324 L (1 mol) of TTP was dissolved in 4 mol anhydrous ethyl alcohol. This solution was slowly poured into 100 mol of stirred distilled water at 10° C, what caused the hydrolysis and condensation yielding a white sol. This colloidal $TiO_2$ suspension was ultrasonicated to get a dispersion and spray-dried in a two-phase Buchi Mini Spray Dryer: the feed phase was injected by a pump at a constant speed of 400 ml/h through a nozzle in which pressurized air (2.5 bar) was mixed to give droplets. These droplets containing agglomerated colloidal $TiO_2$ were dried in a co-current of hot air supplied at the temperature of 260°C and were collected on a glass cloth filter.

The particles were dried for 24h in dry air and exposed in a furnace for 1 minute at 500° C to get electronic sintering, then were annealed for 1.5 hour at 450° C, with constant stirring. The porous spherical particles with diameters ranging from 1 to 9 $\mu$m were stored in a darkened vacuum dessicator prior to use. Powder X-ray diffraction spectra (XRD, Siemens) showed a crystallized pure anatase phase. Measurement of $N_2$ desorption isotherms at 77°K using a Micromeretics ASAP 2010 sorptometer is depicted in FIG. 9. It shows a bimodal pore distribution, with a first pore size peaking at 3.5 nm and a second one at 48 nm.

EXAMPLE 2 Mesoporous microparticles with porosity forming aid

A colloidal $TiO_2$ suspension obtained as in Example 1 was peptised by refluxing with 1N $HNO_3$, then autoclaved at 230° C for 12 hours. Ethylene glycol polymer (Carbowax™ 20000, 40% wt. equiv. of $TiO_2$) thoroughly mixed with the $TiO_2$ suspension was spray-dried and sintered in the same conditions as in Example 1, yielding porous particles. Ethylene glycol volatilised without leaving any substantial residue. XRD spectra showed a crystallized pure anatase phase. Nitrogen desorption isotherms at 77°K showed a bimodal pore distribution, with a first pore size peaking at 3.3 nm and a second one at 64 nm.

EXAMPLE 3 Aluminium-doped active material

A mixture of 1 mole of titanium isopropoxide and 0.015 mole aluminum isopropoxide was reacted in a three-neck flask under reflux for 24 hours. The solution changed color during reflux, indicating that a complex alkoxide of titanium and aluminum was obtained. The resulting complex alkoxide was dissolved in 4 moles anhydrous ethyl alcohol and colloidal Al-doped $TiO_2$ dispersion was processed like in Example 1, with a final annealing for 1.5 hour at 490° C. XRD spectra showed a crystallized pure anatase phase and an analysis by the Rietveld method showed that the crystallized material was a solid solution in which 1.5% of titanium was uniformly replaced by aluminum.

EXAMPLE 4 Niobium-doped active material

45 g of niobium pentachloride were dissolved into 1 L of anhydrous ethanol at room temperature into a 10 L reaction vessel and 2.5 L of titanium tetraisopropoxide were added thereto. 2 L of a mixture of 0.03 M HCl in 93% ethanol cooled at ca. 0° C were added dropwise to the dissolved metals solution. The translucent hydrolysed suspension was added to 1.5 L of distilled water at room temperature into another 10 L reaction vessel and stirred until it turned transparent. This solution was then heated for 12 hours at 60° C under constant stirring, to yield a colloidal feed solution, after evaporation of one half of the liquid.

After spray-drying and sintering in the same conditions as given in Example 1, elemental and XRD analysis of the microparticles indicated a content of 2% of niobium vs. Ti in an anatase phase. Nitrogen desorption showed a bimodal pore distribution, with a first pore size peaking at 3.5 nm and a second one at 50 nm. A redox potential of 1.45 V vs. lithium was measured.

EXAMPLE 5 Niobium-doped lithiated oxyhydroxide active material

0.05 L of a solution of 1.5 molar niobium pentachloride mixed with 2.45 L of 1.5 molar titanium tetrachloride were added over a period of 1 hour to 3 L of a 6 molar solution of ammonia, cooled over ice. The translucent solution further mixed for 2 hours had a pH of 9. Acidification with 0.85 L of a 3.6 M solution of HCl over a period of 2 hours yielded a milky suspension with a pH of 4.5. After filtering and washing with 8 liters of distilled water, the filter cake containing niobiate-titanate was redispersed in 6 L of thoroughly stirred water kept at 10° C over ice, to which a solution of 2.5 molar lithium hydroxide was added dropwise over a period of half an hour in such a proportion that an atomic ratio of Li vs. Ti was 1.12.

This suspension was spray-dried as in Example 1, excepted that after spray-drying, sintering was performed in a fluidised bed at 720° C for 12 hours in an oxygen atmosphere. Dark microparticles thus obtained were washed with distilled water. Nitrogen desorption showed a bimodal pore distribution, with a first pore size peaking at 3.3 nm and a second one at 45 nm. Elemental analysis confirmed that 2%-Nb doped lithium titanate $Li_{1.33} Nb_{0.03} Ti_{1.63} O_4$ had been obtained.

120 gr of this titanate powder were dispersed in 5 L of distilled water and 1 L of 4M hydrochloric acid added over a period of half an hour. This mixture was refluxed for 4 hours, then filtered. The white powder obtained was filtered and washed with 6 L hot distilled water. Measurement of lithium ions on the powder by flame emission spectrometry indicated that Li+ /H+ exchange took place in 98% of the initial lithium ions.

Elemental analysis confirmed that 2%-Nb doped oxyhydroxide titanate $H_{1.29} Li_{0.02} Nb_{0.03} Ti_{1.63} O_4$ had been obtained. Nitrogen desorption showed a bimodal pore distribution, with a first pore size peaking at 3.2 nm and a second one at 43 nm.

EXAMPLE 6 Mesoporous microparticles with nanorods

A colloidal $TiO_2$ dispersion was prepared by hydrolysis and condensation of titanium tetraisopropoxide (TTP). 0.324 L (1 mol) of TTP was rapidly poured into 0.6 L (32 mol) of distilled water at 10° C stirred for 1 h., yielding a white sol. This colloidal $TiO_2$ suspension was filtered, the filter cake re.washed with water and added to 60 mL of 0.6 M tetramethylammonium hydroxide. This suspension was peptised by autoclaving at 120° C for 4 h, yielding a translucent bluish liquid. An hydrothermal growth at 220° C for 5 h., with a pH of ca. 13 resulted in rodlike anatase particles of ca. 15 nm width and an aspect ratio of ca. 3.

A suspension of 30% of these anatase nanorods with 69.6% globular nanoparticles obtained as in Example 1 and 0.4% carbon nanotubes (Aldrich) were spray-dried and sintered in the conditions of Example 1. Spherical particles with a slightly wavy surface were obtained, exhibiting an anatase structure as shown by XRD. The porosity had a bimodal distribution, with a first pore size peaking at 3.5 nm and a second one at 53 nm.

EXAMPLE 7 Microspheres with a mesoporous coating

10 gr. of dense antimony-doped tin oxide coated titanium oxide particles of 0.2 μm in diameter obtained from Mitsubishi Materials Company Ltd as W-1 conducting particles were added to a colloidal $TiO_2$ dispersion prepared as in Example 1. After spray-drying and sintering in the same conditions as in Example 1, particles of 0.3 μm in diameter with a mesoporous superficial coating having a first pore size peaking at 3.4 nm, a second one at 47 nm and a dense core were obtained.

EXAMPLE 8 Heterogenous coated microparticles

50 gr of porous tin oxide nanoparticles of 19 $m^2$/gr specific area, obtained from $SnCl_4$ through known art flame synthesis, see e.g. US Pat. No. 5,861,132, were dispersed with 50 gr. of niobium-doped anatase mesoporous microparticles obtained in Example 4 and 66 gr Carbowax™ 20000. This suspension was spray-dried and sintered in the same conditions as in Example 1. Spherical particles of an average diameter of 7 μm, with a mesoporous superficial tin oxide coating and a mesoporous internal Nb-doped anatase core having a first pore size peaking at 3.4 nm, a second one at 59 nm were obtained.

EXAMPLE 9 Microparticles composed from electroactive metal nanoparticles

20 gr of nanoparticles of $Cu(In,Ga)Se_x$ obtained from Thin film physics group of ETH Zürich were mixed with 5 gr dry Nb-doped $TiO_2$ lyophilised mesoporous nanoparticles obtained in Example 4, and were suspended with 15 gr Carbowax™ 20000 in 0.2 L dry acetone. This feed suspension was spray-dried in the same conditions as for Example 1 and sintered at 550° C. Spherical particles of 3 μm average diameter were obtained, having a first pore size peaking at 3.5 nm, a second one at 48 nm.

EXAMPLE 10 Flaky mesoporous particles

Microparticles were produced according to Example 1. During the spray-drying step, the stream of agglomerated particles was impacted onto a rotating drum coated with an anti-adhesive PTFE layer, water-cooled to 10° C. The particles scraped off from the drum had a flaky shape, i.e. an average aspect ratio of 4. They were sintered according to Example 1, kept their flaky shape, and had a first pore size peaking at 3.4 nm and a second one at 49 nm.

EXAMPLE 11 Patterned coating of mesoporous microparticles with binding polymer

The spherical Nb-doped $TiO_2$ microparticles obtained in Example 4 were mixed with a latex of PVDF, available in a latex form as KYNAR 32™ (Elf Atochem). The aqueous suspension contained as solids approximately 89% active material, 4% KYNAR 32™, 2% graphitic carbon spheroids (Timrex™ KS4, Timcal), 2% acetylene black and 3% secondary alcohol ethoxylate (TERGITOL™ 15-S-5, Union Carbide). This aqueous feed forming a uniform aqueous slurry after stirring at room temperature was spray-dried as in Example 1 and collected on a glass cloth filter under an air current at 10° C. The coated particles collected were dried for 4h in dry air at 60° C.

EXAMPLE 12 Patterned coating of mesoporous microparticles with mixed conductive polymer and binding polymer

The spherical $TiO_2$ microparticles obtained in Example 1 were mixed with a latex of poly(3,4-ethylenedioxythiophene) doped with divalent sulfate ions monovalent alkylnaphthalenesulfonate (PEDOT™, Bayer AG) and a latex of KYNAR 32™ (Elf Atochem). The aqueous suspension contained as solids approximately 90% active material, 3% PEDOT™, 3% KYNAR 32™, 2% of rutile nanobeads coated with F-doped tin oxide and 1% TERGITOL™ 15-S-5. This aqueous feed forming a uniform aqueous slurry was spray-dried as in Example 1 and collected on a glass cloth filter under an air current at 10° C. The translucent coated particles collected were dried for 4h in dry air at 60° C.

EXAMPLE 13 Die casting

A first composite casting fluid for an anode was prepared by dispersing 8 gr of octylene carbonate in 30 millilitres of deionized $H_2O$ under stirring at room temperature, then adding 40 gr of microparticles of $TiO_2$ doped with niobium obtained as in Example 4.
Porous zirconia nanoparticles were prepared as described by P. Bonhote et al., J. Phys. Chem. B (1998) 102, 1498-1507 and porous zirconia microparticles were prepared by spray-drying, as described in Example 1, excepted that the sintering temperature was 1300 °C. $ZrO_2$ microparticles were coated with PVDF binder as described in Example 10. A second composite casting fluid for a separator was prepared by dispersing 3 gr of octylene carbonate in 10 millilitres of deionised $H_2O$ under stirring at room temperature, then adding 15 gr of the inert porous microparticles of $ZrO_2$.
Octylene carbonate was added as a plasticiser to protect the solid components from high shear stress during casting and to get the desirable rheology.
With reference to FIG. 5, the two composite fluids were pumped into a multilayer slot die set 61 (Troller Schweizer Engineering) as fluids 64 and 65, then simultaneously casted as a two-layer membrane 68 and 69 on a copper current collector 70 laminated on a barrier film (not shown), with thicknesses of respectively 40 μm for the anode, and 5 μm for the adhesive porous separator.

EXAMPLE 14 Comparative classical casting

100 parts by weight of a high voltage composite oxide lithium manganate cathode of a composition : Li $Cr_{0.05}$ $Mn_{0.95}$ $O_2$ (Pacific Lithium) were mixed with 2.5 parts by weight of graphite and 2.5 parts by weight of carbon black (Super P™, Chemetals).
The resultant mixture was further mixed with a solution prepared by dissolving 2 parts by weight of a fluororubber (a terpolymer of tetrafluoroethylene, vinylidene fluoride and hexafluoropropylene, from Solvay) in 60 parts by weight of a mixed solvent of ethyl acetate and ethyl cellosolve in a weight ratio of 1:1. Thus, a coatable slurry was obtained and casted with doctor blading on an aluminium current collector laminated on a barrier film. The solvent was evaporated in an air current at 40° C and the cathode was further dried for 6 hours under vacuum.

EXAMPLE 15 Mesoporous discrete microparticulate electrochemical generator

The die-casted laminar anode-separator assembly obtained in Example 13 was covered with the high voltage cathode obtained in Example 13. The stack was pressed for 30 min. between plates heated at 145 ° C to cure the binder while being exposed to vacuum. The casting aid that had not yet completely evaporated was extracted with supercritical carbon dioxide.

The precursor cell was then packaged in moisture-impermeable material, which is described e.g. in U.S. Pat. No. 5,326,653, before being activated. The electrolyte was filled in an inert argon atmosphere with a solution of 1.2 M lithium bis-(trifluorosulfonyl) imide in methoxyethoyx propionitrile. Finally, the packaging of the electrochemical cell was sealed.

This high safety cell had a nominal voltage of 3.4 V; the battery could deliver current at 2C and also be recharged at about the same rate.

EXAMPLE 16 Multilayer mesoporous discrete microparticulate photoelectrochemical cell

Four different composite casting masses were prepared:

•	a first casting mass was prepared by dispersing of 8 gr of octylene carbonate in 30 millilitres of deionized $H_2O$ under stirring at room temperature, then adding 40 gr of binder-coated microparticles of pristine $TiO_2$ prepared as in Example 11;

•	40 gr of coated porous micropartides of $TiO_2$ prepared as in Example 11 were soaked for 12 hours in an ethanol solution containing $3 \times 10^{-4}$ M cis-Di (thiocyanato)-N,N-bis(2,2'-bipyridyl-4,4'-dicarboxylic acid)-ruthenium (II)dihydrate dye obtained from Solaronix. This layer of red dye attached at the surface of $TiO_2$ was washed with isopropanol and dried. The dyed microparticles were soaked for 12 hours in a 0.02 M of tetrapropylpyridine to cover unreacted sites, washed with isopropanol and dried. These dyed and binder-coated particles were mixed with the same volume of aqueous octylene carbonate as the previous casting mass: this constituted a second casting mass.

•	A third casting mass was prepared from porous microparticles dyed like in the example of the previous casting mass, excepted that a black dye $3 \times 10^{-4}$ M tri(cyanato)-2,2',2-terbipyridyl-4,4',4"-tricarboxylate) ruthenium(II) obtained from Solaronix was used.

•	A fourth casting mass was prepared from porous $ZrO_2$ microparticles obtained by the method described in Example 12. 40 gr of octylene carbonate in 150 millilitres of deionized $H_2O$ were dispersed under stirring at room temperature, then 200 gr of binder-coated microparticles of $ZrO_2$ were added.

With reference to FIG. 6A the four casting masses were pumped into a multilayer slot die with three dies side-by-side (Troller Schweizer Engineering) and simultaneously casted on a patterned etched indium-tin oxide (ITO) conductive film 73 deposited on a barrier film 72 (Barix™, Vitex Systems Inc.) as three-bands of each two-layers of a thickness of respectively 4 micrometers active photoconverter and 15 micrometers of porous spacer (74 and 77), (75 and 77), (76 and 77).

Stainless steel wires (79) of 10 micrometers of diameter (Beckinox™, Beckaert) were coated with acetylene black bonded by PVDF from a solution in methyl pyrrolidone (optionally sputtered with Pt). They were disposed in parallel rows spaced by 5 mm and pressed to stay flush with the surface of the spacer. A second Barix™ barrier film (not shown) was laminated over each of the stacks and bonded between the stacks directly to the other barrier film with adhesives. The stacks were pressed for 30 min. between plates heated at 145 ° C to cure the binder while being exposed to vacuum.

An electrolyte solution composed from 0.5 M lithium iodide and 0.04 M $I_2$ in 4:1 ethylene carbonate/ acetonitrile was then drawn into each of the three cells. The cells were then sealed with adhesives.

With reference to FIG. 6B, the cells were stacked in a Z-folded arrangement.

Alternatively, the band of parallel cells was rolled to have the three cells stacked as shown in FIG. 6C.

EXAMPLE 17 Mesoporous discrete microparticulate electrochemichromic display

An aqueous suspension was prepared, containing as solids approximately 3.5 % PVDF in the form of a latex (KYNAR 32™, Elf Atochem), 0.2 % secondary alcohol ethoxylate (TERGITOL™ 15-S-5, Union Carbide) and solid-core microspheres with a mesoporous $TiO_2$ coating prepared as in Example 7.

This aqueous feed forming a uniform aqueous slurry after stirring at 15 °C was spray-dried as in Example 1 and collected under a cyclone in air current at 10° C on a glass cloth filter. The PVDF binder-coated particles collected were dried for 4h in dry air at 60° C and soaked for 24h in an 0.02M aqueous solution of the redox viologen chromophore bis-(2-phosphonoethyl)-4, 4'-bipyridinium dichloride (synthesized according to the method of Hagfeldt et al. cited herein in paragraph 7 "Electrochemichromic cell"). The microparticles with the chromophore attached were washed with distilled deionised water and dried in air.

A casting mass was prepared by dispersing of 8 gr of octylene carbonate in 30 millilitres of deionized $H_2O$ under stirring at room temperature, then adding 40 gr of pristine $TiO_2$ binder-coated microparticles prepared as in Example 11.

The casting mass was pumped into an 40 μm annular slot die (Troller Schweizer Engineering) over a stainless steel wire of 25 micrometers of diameter (Beckinox™, Beckaert), dried in 30° C air for one hour and cured at 130° C.

The cathodic wires thus obtained were woven together with 15 μm surface oxidized zinc anodic wires coated with a patterned extruded layer of Nucrel™ (DuPont).

The weave was enclosed in a pair (104) and (105) of barrier layers (Barix™), with the extremities of the parallel wires (92) and (97) protruding from two of the sides of the weave, as shown in FIG. 8A and connected to a multiplexed signal bus.

The cell was then back-filled using an argon pressure with the electrolyte (103) composed of 0.2 M zinc chloride in 1-ethyl-3-methyl-imidazolium bis-triflylamide, percolating through the porous electrodes.

When a voltage of 1 V was applied between the electrodes, the point corresponding to the crossing of the wires turned to a blue reflected color in 1 second and stayed blue for hours without further electrical signal. This point returned to white also in 1 second when the potential was reverted to 0 V and stayed white for hours without further electrical signal. Using the same wires in a multiplexed way allows therefore to address any point in the matrix and maintain it durably without additional energy consumption.

Electrodes in short circuit became blue, in the most thermodynamically stable state.

While the invention has been disclosed in terms of certain specific embodiments thereof it is not intended to be limited thereto, but rather only to the extent set forth hereafter in the claims which follow.

## Claims

1. An electrochemical cell comprising an electrode which is composed at least of:

   - (a) a first electrode active material that possesses a bimodal pore size distribution of which at least one size is mesoporous, as measured by nitrogen porosimetry using the desorption isotherm, wherein the bimodal mesoporous electrode active material is characterized as having been converted from agglomerated nanoparticles by thermal means;
   - (b) a curable organic binder; and
   - (c) an electrical conduction means operatively associated with the electrode active material.

2. An electrochemical cell comprising an electrode which is composed at least of:

   - (a) a first electrode active material comprising a chalcogenide, hydroxide, oxyhydroxide, oxoacid, oxohydride or thiocyanic acid of non-transition or transition metals, or their lithiated or partially lithiated forms selected from the group consisting of Group IB, IIA, IIB, IIIA, IVA, IVB, VA, VB, VIB, VIIB and VIII elements of the Periodic Table of Elements, and blends thereof, that possess a bimodal pore size distribution of which at least one size is mesoporous, as measured by nitrogen porosimetry using the desorption isotherm, wherein said bimodal mesoporous active material is characterized as having been converted from agglomerated nanoparticles by thermal means:

   - (b) an curable organic binder;
   - (c) an electrical conduction means operatively associated with the electrode active material.

3. An electrochemical cell according to any of claims 1 or 2 wherein the electrode active material possesses a bimodal mesoporous form, wherein the particle has a first average pore radius of 5 nm or less and a second average pore radius differing by at least about 5 nm, as measured by nitrogen porosimetry using the desorption isotherm.

4. An electrochemical cell comprising electrodes including different electrode active materials connected together by an electrolyte, wherein the first electrode active material used in the composition of at least one electrode comprises discrete solid bimodal mesoporous micropartides having a first average pore radius of 5 nm or less and a second average pore radius differing by at least about 5 nm, as measured by nitrogen porosimetry using the desorption isotherm, and having a specific surface area of 0.01 $m^2$/g to 300 $m^2$/g., wherein each said discrete microparticle is coated with a curable organic binder.

5. An electrochemical cell according to any of claims 1 to 4 wherein the first electrode active material is composed of discrete bimodal mesoporous microparticles that are assembled as discrete contacting particles to form a reticulated three dimensional bicontinuous structure consisting of:

   - an electrically interconnected solid phase material used as electrochemical mediator and for electronic transport, which is in contact with
   - interconnected intra-particular pore space and inter-particular space filled with electrolyte used for ionic transport.

**6.** An electrochemical cell according to any of claims 1 to 5 wherein said curable organic binder is used as a superficial coating of said microparticles in a proportion of 0.5% to 10% of the weight of said microparticles and is composed of a polymeric material with a glass transition temperature of at least 50° C selected from the group of polymers consisting of: polyvinylidene fluoride, polytetrafluoroethylene, fluororubber (which is a terpolymer of tetrafluoroethylene, vinylidene fluoride and hexafluoropropylene), polyvinyl polymers such as polyvinylpyrrolidone, polyamides, polyurethanes; ethylene acrylic acid (EM) copolymers, ethylene methacrylic acid (EMAA) copolymers, polyethylene (PE), polypropylene (PP), ethylene-propylene-diene terpolymers (EPDM), polyalkylene oxides, polybutylene, ionically cross-linked ethylene methacrylic acid copolymer, ethylene n-butyl acrylate (EnBA) polymers, ethylene vinyl acetate (EVA) polymers, ethylene ethyl acrylate (EEA) copolymer, ethylene methyl acrylate (EMA) copolymer, bisallylnadiimide or allylnadiimide, polysulfones, polyethersulfones, polyimides, polyamide-imides, epoxy resins, polyarylene ether ketones such as chloromethylated polyarylene ether ketones, acryloylated polyarylene ether ketones, a nitrile rubber, an ethylene-propylene rubber, a styrene-butadiene rubber, polyetherimides, polystyrene, cholromethylated polyethersulfones, acryloylated polyethersulfones, polymethyl methacrylate, a polysulfide rubber, cyanoethyl cellulose, methyl cellulose, and oligomer and blends thereof.

**7.** An electrochemical cell according to any of claims 1 to 6 wherein said curable organic binder is further blended with an electronic conductive material selected from the group consisting of a non-doped or doped intrinsically conductive polymer, polythiophene, polyphenylene, polypyrrole, polyacetylene, polyisothionaphthene, polyaniline, polyethylenedioxythiophene (PEDOT), poly(phenylenevinylene), substituted derivatives thereof and co-polymers thereof, a conductive particle, carbon black, fine particles of carbon, of graphitised carbon, of graphite, carbon whiskers, carbon nanotubes, fullerenes, highly conductive colloidal metals and doped metal oxides, alloys of said metals, metallic nano-fibers, and mixtures thereof.

**8.** An electrochemical cell according to any of claims 1 to 7 wherein said curable organic binder is coated selectively at the surface of said microparticles to form a patterned coating comprising elongated members.

**9.** An electrochemical cell according to any of claims 1 to 8 wherein said microparticles further comprise, blended with the first electrode active material, solid particles selected from the group of acicular particle of the electrode active mass, fine carbon, acicular graphite, acicular graphitised carbon, carbon nanotubes, conductive metallic or doped metal oxide nanoparticle, nanoparticle of a second electrode active material, electrically conductive fiber, and blends thereof.

**10.** An electrochemical cell according to any of claims 1 to 9 wherein said discrete microparticles have an about spherical or granular shape and have a size of 0.05 to 30 μm in diameter.

**11.** An electrochemical cell according to any of claims 1 to 10 wherein said discrete microparticles comprise a core selected from the group of non-porous inactive microsphere and porous microsphere composed from a second electrode active material, over which said bimodal mesoporous first electrode active material is coated.

**12.** An electrochemical cell according to any of claims 1 to 9 wherein said discrete microparticles have a platelet or flaky shape with an aspect ratio greater than 3 and have a size of 0.1 to 30 μm in their largest dimension.

**13.** An electrochemical cell according to any of claims 3 to 12 or 1 wherein said electrode active material is a chalcogenide, hydroxide, oxyhydroxide, oxo-acid, oxohydride or thiocyanic acid of non-transition or transition metals, or their lithiated or partially lithiated forms, selected from the group consisting of Group IB, IIA, IIB, IIIA, IVA, IVB, VA, VB, VIB, VIIB and VIII elements of the Periodic Table of Elements, and blends thereof.

**14.** An electrochemical cell according to any of claims 1 to 13 wherein said electrode active material is doped by substitution or a solid solution, wherein from 0.2% to 49% of the atoms of the non-transition or transition metal are substituted by another transition or non-transition metal selected from the group consisting of Group IB, IIB, IIIA, IVA, IVB, VA, VB, VIB, VIIB and VIII elements of the Periodic Table of Elements, and blends thereof, wherein the electrode potential of said doped electrode active material is shifted by more than 0.05V vs. pristine electrode active material and the fusion point of said doped electrode active material is shifted by more than 10° C vs. pristine electrode active material.

**15.** An electrochemical cell according to any of claims 1 to 14 wherein said electrode active material in a fully lithiated form and doped with a solid solution from 0.2% to 49% of the atoms of a non-transition or transition metal has its lithium partially or totally exchanged for hydrogen to yield an electrode active material represented by the following formula (I):

$$H_x \, Li_{y-x} \, M_d \, M''_{z-d} \, O_4 \qquad (I)$$

- wherein M is at least one element selected from Ti, Zr, Hf; M'' is at least one element selected from the group consisting of Al, Ga, Zn, Sn, Cu, Si, Ag, In, Ti, Zr, Hf, V, Nb, Ta, Cr, Fe, Mn, Mo and W; and x, y, z and d are respectively a number satisfying conditions: $y \geq x > 0$, $0.8 <= y <= 2.6$, $1.3 <= z <= 2.2$, and $0.02 <= d <= 0.49$.

16. An electrochemical cell according to any of claims 1 to 15 wherein said electrode active material is a lithium titanium niobiate oxyhydroxide electrochromic material represented by the following formula (II):

$$H_x \, Li_{y-x} \, Nb_d \, Ti_{z-d} \, O_4 \qquad (II)$$

- and y, z and d are respectively a number satisfying conditions: $y \geq x > 0$, $0.8 <= y <= 2.6$, $1.3 <= z <= 2.2$, and $0.02 <= d <= 0.49$.

17. An electrochemical cell according to claim 16 wherein said lithium titanium niobiate oxyhydroxide electrochromic material can also be used as an electrical energy storage material.

18. An electrochemical cell according to claim 14 wherein said electrode active material comprises a mixture of the doped and pristine forms of same electrode active material, grouped in the same particle, thereby providing microparticles with domains of different fusion points.

19. An electrochemical cell according to any claims 1 to 18 wherein the surface of said electrode active material is modified by an attached monolayer of a sensitizing dye or adsorbed redox chromophore.

20. A method of fabricating mesoporous sheet components for use as at least one of an anode, a cathode, and a separator in an electrochemical cell, said method comprising the steps of:

- (a) providing a first aqueous composition which comprises nanoparticles of a material that is selected from the group consisting of anodic electrode active nanoparticles, cathodic electrode active nanoparticles and electrode inactive nanoparticles;

- (b) drying droplets of said first aqueous composition, thereby forming discrete agglomerated microparticles;

- (c) converting said discrete agglomerated particles by thermal means to form a discrete solid bimodal mesoporous microparticle having a first average pore radius of 5 nm or less and a second average pore radius differing by at least about 5 nm, as measured by nitrogen porosimetry using the desorption isotherm;

- (d) providing a second aqueous composition comprising said bimodal mesoporous microparticles and a curable binding material;

- (e) drying droplets of said second aqueous composition, thereby forming a free-flowing powder of discrete porous microparticles coated with a curable binding material;

- (f) depositing from a dispersed state a layer of said coated microparticles to a desired thickness; and

- (g) bonding the microparticles by polymerising, cross-linking, heat-setting or otherwise curing the binding material to form a mesoporous sheet component for an electrochemical cell with a plurality of passageways for an electrolyte.

21. The method of claim 20 wherein said nanoparticles are prepared by subjecting said material to an intense mechanical grinding until a nanocrystalline powder is obtained.

22. A method according to any of claims 20 or 21 wherein said first aqueous composition further comprises solid particles selected from the group the group of acicular particle of the electrode active mass, fine carbon, acicular graphite, acicular graphitised carbon, carbon nanotubes, fullerene, conductive metallic or doped metal oxide nanoparticle, nanoparticle of a second electrode active material, electrically conductive fiber, porous microsphere, nonporous microsphere, and blends thereof.

23. A method according to any of claims 20 to 22 wherein said first aqueous composition further comprises an extractable, volatilisable or combustible porosity forming aid selected from the group of ionic or nonionic surfactants, synthetic polymers, alkyl polyethylene oxide, alkyl and aryl polyethylene oxide, and polyethylene oxide-polypropylene oxide-polyethylene oxide block co-polymer molecules, carboxymethyl cellulose, methyl cellulose, hydroxymethyl cellulose, ethyl cellulose, phthalates, polyvinyl alcohol, polyacrylic acid (or polyacrylate), natural polymers, oxidized starch, phosphorylated starch, casein starch and polymers that volatilise below 450° C.

24. A method according to any of claims 20 to 23 wherein said curable binding material is selected from the group of polymers consisting of: polyvinylidene fluoride, polytetrafluoroethylene, fluororubber (which is a terpolymer of tetrafluoroethylene, vinylidene fluoride and hexafluoropropylene), polyvinyl polymers such as polyvinylpyrrolidone, polyamides, polyurethanes; ethylene acrylic acid (EAA) copolymers, ethylene methacrylic acid (EMAA) copolymers, polyethylene (PE), polypropylene (PP), ethylene-propylene-diene terpolymers (EPDM), polybutylene, ionically cross-linked ethylene methacrylic acid copolymer, ethylene n-butyl acrylate (EnBA) polymers, ethylene vinyl acetate (EVA) polymers, ethylene ethyl acrylate (EEA) copolymer, ethylene methyl acrylate (EMA) copolymer, bisallylnadiimide or allylnadiimide, polysulfones, polyethersulfones, polyimides, polyamide-imides, epoxy resins, polyarylene ether ketones such as chloromethylated polyarylene ether ketones, acryloylated polyarylene ether ketones, a nitrile rubber, an ethylene-propylene rubber, a styrene-butadiene rubber, polyetherimides, polystyrene, cholromethylated polyethersulfones, acryloylated polyethersulfones, polymethyl methacrylate, a polysulfide rubber, cyanoethyl cellulose, methyl cellulose, and oligomer and blends thereof.

25. A method of fabricating mesoporous components in an electrochemical cell according to any of claims 20 to 24 wherein the step (e) comprises adding to said second aqueous composition an electronic conductive material selected from the group consisting of an intrinsically conductive polymer, polyaniline, polythiophene, polyphenylene, polypyrrole, polyacetylene, polyisothionaphthene, poly(phenylene sulfide), poly(p-phenylene), polyethylenedioxythiophene (PEDOT), poly(phenylenevinylene), poly(heterocycle vinylene), substituted derivatives thereof and co-polymers thereof, doped or substituted derivatives thereof and co-polymers thereof, a conductive particle, carbon black, fine particles of carbon, of graphitised carbon, of graphite, carbon whiskers, carbon nanotubes, fullerenes, highly conductive colloidal metals and doped metal oxides, and alloys of said metals, metallic nano-fibers, and blends thereof.

26. A method according to any of claims 20 to 25 wherein said curable binding material or said intrinsically conductive polymer is in the form of a latex composition comprising a suspension of polymer particles in water and being added in an amount such as to provide a coating on said microparticles particles of from 0.5% to 10% by weight of latex solids based on the weight of said coated microparticles.

27. A method according to any of claims 20 to 26 wherein the step (e) comprises adding to said second aqueous composition a surfactant having a hydrophilic-lipophilic balance value of less than about 13.

28. A method according to any of claims 20 to 27 wherein the step (e) further comprises attaching a monolayer of a sensitizing dye or adsorbed redox chromophore on the surface of said free-flowing porous microparticles.

29. A method according to any of claims 20 to 28, wherein said step (f) of depositing from a dispersed state further comprises coating simultaneously several layers comprising discrete porous microparticles of dissimilar composition, selected from the group of electrode and separator layers, short and long wavelength dye-sensitized layers, short and long wavelength redox chromophore layers, small and large pore volume layers, low and high said binder loading layers, low and high said electronic conductive material loading layers, electrically active and barrier layers, and combination thereof.

30. A method according to any of claims 20 to 29, wherein said step (f) of depositing from a dispersed state further comprises a coating method selected from the group of premetered coatings such as patch die coating, slot or extrusion coating, slide or cascade coating, and curtain coating; roll coating such as knife over roll coating, forward and reverse roll coating; gravure coating; dip coating; spray coating; meniscus coating; spin coating; brush coating; air knife coating; silk screen printing processes; electrostatic printing processes; thermal printing processes; ink jet; and other similar techniques.

31. A method of fabricating mesoporous components in an electrochemical cell according to any of claims 20 to 30, wherein said step (f) further comprises depositing a layer of said coated microparticles onto an electrically conductive substrate and step (g) further comprises heating the layer to a temperature of between 100° C to 180° C.

32. A method according to any of claims 20 to 31, wherein said step (f) further comprises depositing a layer of said coated microparticles concentrically onto an elongated electrically conductive member.

33. A method according to any of claims 20 to 32, wherein said nanoparticles are prepared by hydrolyzing an organic metal or metalloid precursor of said anodic electrode active material, cathodic electrode active material or electrode inactive material.

34. A method according to any of claims 20 to 33, wherein said nanoparticles are further doped and prepared by hydrolyzing a composition containing a mixture of (i) an organic metal or metalloid precursor of said anodic electrode active material or said cathodic electrode active material, and (ii) an organic metal or metalloid precursor of dopant for anodic electrode active material or of dopant for cathodic electrode active material.

35. An electrochemical device including an electrochemical cell selected from the group of photoelectrochemical cell, electrochemichromic cell and electrochemical generator, comprising at least:

   • an electrode active material composed of porous semi-conductor material that possesses pores in a bimodal mesoporous form, as measured by nitrogen porosimetry using the desorption isotherm,
   • an electrical conduction means operatively associated with the electrode active material through a linking means, and
   • an ionic conduction means operatively associated with the electrode active material.

36. An electrochemical device including an electrochemical cell selected from the group of photoelectrochemical cell, electrochemichromic cell and electrochemical generator, comprising at least:

   • an electrode active material composed of porous semi-conductor material that possesses pores in a bimodal mesoporous form, as measured by nitrogen porosimetry using the desorption isotherm,
   • an electrical conduction means operatively associated with the electrode active material through a linking means, and
   • an ionic conduction means operatively associated with the electrode active material,

   wherein said electrode active material is composed of discrete solid bimodal mesoporous microparticles that are assembled as discrete contacting particles bonded by an organic binder matrix to form a reticulated three dimensional bicontinuous structure.

37. An electrochemical device including a high rate and high safety secondary electrochemical generator comprising:

   • i) a negative electrode containing a chalcogenide, hydroxide, oxyhydroxide, oxo-acid, oxohydride or thiocyanic acid of non-transition or transition metals, or their lithiated or partially lithiated forms selected from the group consisting of Group IB, IIA, IIB, IIIA, IVA, IVB, VA, VB, VIB, VIIB and VIII elements of the Periodic Table of Elements, and blends thereof, in the form of discrete particles having a bimodal pore size distribution of which at least one pore size is peaking in a region of 5 nm or less, as measured by nitrogen porosimetry using the desorption isotherm, wherein said anode active component is doped to obtain a reduction of potential of more than 0.05 V vs. pristine anode active material and has a potential of no more than 1.5 V versus a lithium reference electrode,

   • ii) a positive electrode comprising a lithiated transition metal chalcogenide compound as cathode active component; wherein said cathode active component has a potential of more than 4.8 V versus a lithium reference electrode,
   • iii) a lithium ion bearing non-aqueous electrolyte operatively associated with the electrodes;
   • iv) a first current collector in contact with said negative electrode and a second current collector in contact with said positive electrode; and
   • v) electrical leads and at least one moisture impervious layer for packaging and sealing said secondary electrochemical generator.

38. The electrochemical device according to claim 37 wherein said negative electrode is composed of titanium dioxide, wherein from 0.2% to 49% of the atoms of the titanium are substituted by another transition or non-transition metal selected from the group consisting of Group IB, IIB, IIIA, IVA, IVB, VA, VB, VIB, VIIB and VIII elements of the Periodic Table of Elements, and blends thereof.

39. An electrochemical device including a photoelectrochemical cell comprising :

   • i) an electrode active material composed of transparent or translucent discrete solid bimodal mesoporous semiconductor microparticles coated with a sensitising dye that are assembled as discrete contacting particles bonded by an organic binder matrix to form a reticulated three dimensional bicontinuous structure;
   • ii) a counter-electrode comprising a catalytic metal or high surface carbonaceous compound;
   • iii) a iodide ion / iodine bearing non-aqueous electrolyte operatively associated with the electrodes;
   • iv) a first current collector in contact with said electrode active material and a second current collector in contact with said counter-electrode; and

- v) electrical leads and at least one moisture impervious and transparent layer for packaging and sealing said photoelectrochemical cell.

40. The electrochemical device according to claim 39, wherein said first or second current collector are selected from the group composed of transparent conductive metal oxide coating on a transparent support, parallel metal wires and opaque electrical conductor film.

41. An electrochemical device including a electrochemichromic cell comprising :

- i) a first electrode active material composed of discrete solid bimodal mesoporous conductor microparticles coated with a redox compound that are assembled as discrete contacting particles bonded by an organic binder matrix to form a reticulated three dimensional bicontinuous structure;
- ii) a second electrode active material bearing a second redox compound;
- iii) a ion bearing and ion conductive non-aqueous electrolyte operatively associated with the electrodes;
- iv) a first current collector in contact with said first electrode active material and a second current collector in contact with said second electrode active material;
- v) electrical leads and at least one moisture impervious transparent layer for packaging and sealing said electrochemichromic cell.

42. The electrochemical device according to claim 41, wherein said first or second current collector are selected from the group composed of transparent conductive metal oxide coating on a transparent support, parallel metal wires and opaque electrical conductor film, wherein said first and second current collectors are intermingled so that their crossing points form an addressable matrix.

Fig. 1

*Prior art Fig. 2*

21

22

23

24

25

26

27

28

*Prior art  Fig. 3*

30

31

38

39

37

33

34

35

36

32

Fig. 4A

Fig. 4B

Fig. 4C

Fig. 5

Fig. 6A

Fig. 6B

Fig. 6C

58

74

75

77

76

72

79

Prior art   Fig. 7

81

82

83

84

89

85

88

87

86

Fig. 8A

Fig. 8B

Fig. 9

Fig. 10

**European Patent Office**

## EUROPEAN SEARCH REPORT

Application Number

EP 00 81 1081

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 811 207 A (MALY-SCHREIBER MARTHA ET AL) 22 September 1998 (1998-09-22) * claims 1-34 * | 1-42 | H01M4/04 H01M4/62 H01M4/86 |
| A | DE 197 44 028 A (KERNFORSCHUNGSANLAGE JUELICH) 15 April 1999 (1999-04-15) * claims 1-9 * | 1-42 | |
| A | DE 197 13 072 A (BASF AG) 1 October 1998 (1998-10-01) * claims 1-13 * | 1-42 | |

TECHNICAL FIELDS SEARCHED (Int.Cl.7)

H01M

The present search report has been drawn up for all claims

| Place of search | Date of completion of the search | Examiner |
|---|---|---|
| THE HAGUE | 9 July 2001 | Battistig, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**                EP 00 81 1081

This annex lists the patent family members relating to the patent documents cited in the above-mentioned European search report.
The members are as contained in the European Patent Office EDP file on
The European Patent Office is in no way liable for these particulars which are merely given for the purpose of information.

09-07-2001

| Patent document cited in search report | | | Publication date | Patent family member(s) | | Publication date |
|---|---|---|---|---|---|---|
| US 5811207 | | A | 22-09-1998 | DE 19509074 | C | 31-10-1996 |
| | | | | EP 0732760 | A | 18-09-1996 |
| | | | | ES 2135118 | T | 16-10-1999 |
| DE 19744028 | | A | 15-04-1999 | AU 1223999 | A | 27-04-1999 |
| | | | | WO 9918623 | A | 15-04-1999 |
| | | | | EP 1029379 | A | 23-08-2000 |
| DE 19713072 | | A | 01-10-1998 | AU 7210498 | A | 22-10-1998 |
| | | | | BR 9808983 | A | 01-08-2000 |
| | | | | CN 1257612 | T | 21-06-2000 |
| | | | | WO 9844576 | A | 08-10-1998 |
| | | | | EP 0970529 | A | 12-01-2000 |

EPO FORM P0459

For more details about this annex : see Official Journal of the European Patent Office, No. 12/82